(19) Europäisches Patentamt / European Patent Office / Office européen des brevets

(11) **EP 2 515 521 B1**

(12) **EUROPEAN PATENT SPECIFICATION**

(45) Date of publication and mention
of the grant of the patent:
**19.06.2019   Bulletin 2019/25**

(51) Int Cl.:
**H04N 1/62** *(2006.01)*    **G06T 5/00** *(2006.01)*

(21) Application number: **11194136.5**

(22) Date of filing: **16.12.2011**

(54) **Image Compensation Device, Image Processing Apparatus And Methods Thereof**

Bildausgleichsverfahren, Bildverarbeitungsvorrichtung und Verfahren dafür

Dispositif de compensation d'images, appareil de traitement d'images et procédés associés

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **18.04.2011   KR 20110035909**

(43) Date of publication of application:
**24.10.2012   Bulletin 2012/43**

(73) Proprietor: **HP Printing Korea Co., Ltd.
Gyeonggi-do 16677 (KR)**

(72) Inventors:
 • **Kim, Kyeong-man**
   **Gyeonggi-do (KR)**
 • **Kim, Kyun-cheol**
   **Gyeonggi-do (KR)**
 • **Cho, Min-ki**
   **Gyeonggi-do (KR)**
 • **Oh, Hyun-soo**
   **Gyeonggi-do (KR)**
 • **Song, Eun-ah**
   **Gyeonggi-do (KR)**
 • **Ha, Yeong-ho**
   **Daegu (KR)**
 • **Kim, Dae-chul**
   **Daegu (KR)**
 • **Kyung, Wang-jun**
   **Gyeongsangbuk-do (KR)**

(74) Representative: **Appleyard Lees IP LLP
15 Clare Road
Halifax HX1 2HY (GB)**

(56) References cited:
**GB-A- 2 430 829      JP-A- 2005 123 790
US-A- 5 796 874      US-A1- 2009 274 386
US-B2- 7 443 552**

 • **DOO HYUN CHOI ET AL: "Color Image
Enhancement Based on Single-Scale Retinex
With a JND-Based Nonlinear Filter", CIRCUITS
AND SYSTEMS, 2007. ISCAS 2007. IEEE
INTERNATIONAL SYMPOSIUM O N, IEEE, PI, 1
May 2007 (2007-05-01), pages 3948-3951,
XP031182172, ISBN: 978-1-4244-0920-4**
 • **TUAN-ANH NGUYEN ET AL: "Fast and efficient
Gaussian noise image restoration algorithm by
spatially adaptive filtering", PICTURE CODING
SYMPOSIUM (PCS), 2010, IEEE, 8 December 2010
(2010-12-08), pages 122-125, XP031885108, DOI:
10.1109/PCS.2010.5702438 ISBN:
978-1-4244-7134-8**

**Description**

**BACKGROUND**

1. Field of the General Inventive Concept

The present general inventive concept relates to a method and apparatus to compensate an image, and a method and apparatus to process an image, and more particularly, to a method and apparatus to compensate a faded image, and a method and apparatus to process a faded image.

2. Description of the Related Art

Photos have been used for a long period of time as a medium for recalling the past. Recently, as digital cameras have been rapidly spread, many users store photos in a memory, or upload photos to a webpage without printing photos, in order to see photos. However, even in such a situation, a considerable number of users print and use photos.

In general, chromaticity of an image captured by a camera varies according to chromaticity of a light source used in capturing process. However, as time passes, chromaticity of a photo is changed, and thus the photo becomes faded generally. In particular, a speed or degree of fading is determined according to an environment such as a temperature or humidity, the characteristics of photographic paper, or the characteristics of material used to print the photo.

Thus, if a user does not have the original data or film of a faded photo, the user may not obtain a photo having original chromaticity.

Thus, technologies of compensating faded photos to have original chromaticity have been developed. However, these technologies are used to compensate a photo of which chromaticity of all parts of the photo is uniformly changed. Thus, it is difficult to compensate a photo of which chromaticity is nonuniformly changed.

Therefore, there is a need for a technology of compensating a photo image to have chromaticity similar to original chromaticity.

Patent publication US 7 443 552 B2 relates to a process of spatial color restoration of an image. Patent publication GB 2 430 829 A describes identifying a scene illuminant by comparison of chromaticity values with stored possible illuminants. Publication ISBN: 978-1-4244-0920-4, pages 3948-3951, discloses "Color Image Enhancement Based on-Single-Scale Retinex With a JND-Based Nonlinear Filter". Patent publication US 58 796 874 A relates to restoration of faded images. Patent publication JP 2005 123790 A discloses an image processing apparatus. Patent publication US 2009/0274386 A1 relates to methods and apparatus for image restoration. Publication ISBN: 978-1-4244-7134-8, pages 122-125, relates to fast and efficient Gaussian noise image restoration algorithm by spatially adaptive filtering.

**SUMMARY**

The present general inventive concept provides a method and apparatus to compensate an image, and a method and apparatus to process an image, thereby effectively compensating a faded image.

Additional features and utilities of the present general inventive concept will be set forth in part in the description which follows and, in part, will be obvious from the description, or may be learned by practice of the general inventive concept.

The foregoing and/or other features and utilities of the present general inventive concept may be achieved by providing an image compensating apparatus as set out in the accompanying claim 1.

The compensating unit may compensate the photo image by using a weight obtained by converting a size of each channel in a Cyb-Crg space into a CMY value.

The division-map generating unit may check Cyb and Crg values of each pixel, wherein, when the Cyb value is equal to or greater than a first predetermined threshold value, the division-map generating unit determines a corresponding pixel to yellow, wherein, when the Cyb value is less than the first predetermined threshold value, the division-map generating unit determines the corresponding pixel to blue, wherein, when the Crg value is equal to or greater than a second predetermined threshold value, the division-map generating unit determines the corresponding pixel to red, and wherein, when the Crg value is less than the second predetermined threshold value, the division-map generating unit determines the corresponding pixel to green.

The image compensating apparatus may further include a saturation and contrast adjusting unit to adjust saturation and contrast of an image of which chromaticity is compensated by the compensating unit.

The calculating unit may calculate average chromaticity of each CMY value according to the following equation:

$$I_{C,avg}(n) = \frac{1}{NP_n} \sum_{x=0}^{NP_n} 1 - R(x,y,n)$$

$$I_{M,avg}(n) = \frac{1}{NP_n} \sum_{x=0}^{NP_n} 1 - G(x,y,n)$$

$$I_{Y,avg}(n) = \frac{1}{NP_n} \sum_{x=0}^{NP_n} 1 - B(x,y,n)$$

wherein 'NPn' is the number of pixels of a region 'n', 'n' is each region, and R(x,y,n), G(x,y,n), and B(x,y,n) are R, G and B values of each pixel of the region 'n', respectively.

The compensating unit may compensate chromaticity of each respective region of the photo image according to the following equation:

$$\hat{I}_i(x,y,n) = W_i(x,y) \frac{I_i(x,y,n) L_{avg}(n)}{I_{i,avg}(n)}, \quad i = C, M, Y$$

wherein Wi(x,y) is a weight of pixels of each channel in the CMY color space, Lavg(n) is average lightness of each respective region, and li(x,y,n) is chromaticity of each respective pixel of an input photo image.

The foregoing and/or other features and utilities of the present general inventive concept may also be achieved by providing a method of compensating an image, the method as set out in the accompanying claim 7.

The compensating may include compensating the photo image by using a weight obtained by converting a size of each channel in a converted Cyb-Crg space into a CMY value.

The generating of the chromaticity division-map may include checking Cyb and Crg values of each pixel, when the Cyb value is equal to or greater than a first predetermined threshold value, determining a corresponding pixel to yellow, when the Cyb value is less than the first predetermined threshold value, determining the corresponding pixel to blue, when the Crg value is equal to or greater than a second predetermined threshold value, determining the corresponding pixel to red, and when the Crg value is less than the second predetermined threshold value, determining the corresponding pixel to green.

The method may further include adjusting saturation and contrast of an image of which chromaticity is compensated.

The calculating may include average chromaticity of each CMY value according to the following equation:

$$I_{C,avg}(n) = \frac{1}{NP_n} \sum_{x=0}^{NP_n} 1 - R(x,y,n)$$

$$I_{M,avg}(n) = \frac{1}{NP_n} \sum_{x=0}^{NP_n} 1 - G(x,y,n)$$

$$I_{Y,avg}(n) = \frac{1}{NP_n} \sum_{x=0}^{NP_n} 1 - B(x,y,n)$$

wherein 'NPn' is the number of pixels of a region 'n', 'n' is each region, and R(x,y,n), G(x,y,n), and B(x,y,n) are R, G and B values of each pixel of the region 'n', respectively.

The compensating may include compensating chromaticity of each respective region of the photo image according to the following equation:

$$\hat{I}_i(x,y,n) = W_i(x,y) \frac{I_i(x,y,n) L_{avg}(n)}{I_{i,avg}(n)}, \quad i = C, M, Y$$

wherein Wi(x,y) is a weight of pixels of each channel in the CMY color space, Lavg(n) is average lightness of each respective region, and li(x,y,n) is chromaticity of each respective pixel of an input photo image.

The image processing apparatus may further include a controller to control the display unit to display a photo image that is compensated by the chromaticity compensating unit, wherein the photo image may include at least one of an image captured by an imaging device installed in the image processing apparatus, an image transmitted from an external device, and an image read from a recording medium installed inside or outside the image processing apparatus.

The compensating method based on an L-Cyb-Crg color space may be a chromaticity compensating method including performing Gaussian filtering on a photo image, converting the photo image into the L-Cyb-Crg color space, generating a chromaticity division-map based on a Cyb-Crg color coordinate value, calculating average chromaticity of each respective region by using the chromaticity division-map, and then compensating chromaticity of each respective region of the photo image by using a C-M-Y image of the photo image and the calculated chromaticity of each respective region.

The foregoing and/or other features and utilities of the present general inventive concept may also be achieved by providing a method of processing an image in an image processing apparatus, the method including when a program to compensate a photo image is operated, displaying an interface window to compensate chromaticity, when a photo image to be compensated is selected in the interface window, displaying the selected photo image, and receiving selection of a region to be compensated of the photo image, when the region to be compensated is selected, compensating the selected region by using a basic compensating method, displaying an image that is compensated by using the basic compensating method, when a menu to check a result obtained by using a different compensating method is selected, displaying at least one image that is compensated by using at least one different compensating method, when chromaticity compensation using the basic compensating method or the different compensating method is completed, displaying a menu to adjust saturation and contrast, and when the adjustment of the saturation and the contrast is completed, displaying an image including at least one executing command about a final image.

Any one of the basic compensating method and the different compensating method may be a compensating method based on an L-Cyb-Crg color space including performing Gaussian filtering on a photo image, converting the photo image into the L-Cyb-Crg color space, generating a chromaticity division-map based on a Cyb-Crg color coordinate value, calculating average chromaticity of each respective region by using the chromaticity division-map, and then compensating chromaticity of each respective region of the photo image by using a C-MY image of the photo image and the calculated chromaticity of each respective region.

The foregoing and/or other features and utilities of the present general inventive concept may also be achieved by providing a method of processing an image, the method including: displaying photo images compensated according to a plurality of methods of compensating chromaticity, respectively, when one photo image among the displayed photo images is selected, compensating an original photo image by using a chromaticity compensating method corresponding to the selected photo image, and performing at least one operation of printing, transmitting and storing the compensated photo image, wherein the plurality of methods of compensating chromaticity may include a compensating method based on an L-Cyb-Crg color space and at least one compensating method based on estimation of a light source, and wherein the compensating method based on an L-Cyb-Crg color space is a chromaticity compensating method including performing Gaussian filtering on a photo image, converting the photo image into the L-Cyb-Crg color space, generating a chromaticity division-map based on a Cyb-Crg color coordinate value, calculating average chromaticity of each respective region by using the chromaticity division-map, and then compensating chromaticity of each respective region of the photo image by using a C-M-Y image of the photo image and the calculated chromaticity of each respective region.

According to the above-described features of the inventive concept, a faded image may be effectively processed.

## BRIEF DESCRIPTION OF THE DRAWINGS

For a better understanding of the invention, and to show how embodiments of the same may be carried into effect, reference will now be made, by way of example, to the accompanying diagrammatic drawings in which:

FIGS. 1 and 2 are block diagrams illustrating an image compensating apparatus, according to various exemplary embodiments of the present general inventive concept;
FIG. 3 illustrates scan images of the original photo and photos exposed to the sun;
FIG. 4 is a graph illustrating a variation of chroma of a faded image;
FIG. 5 is a graph illustrating a variation of saturation of a faded image;
FIG. 6 is a graph illustrating a variation of lightness of a faded image;
FIGS. 7 and 8 are images and a graph illustrating a variation of hue as time passes;
FIG. 9 is a color coordinate image illustrating a Cyb-Crg color plane;
FIG. 10 is a diagram of a chromaticity division-map, according to an exemplary embodiment of the inventive concept;
FIG. 11 is a flowchart of a method of generating a chromaticity division-map, according to an exemplary embodiment of the inventive concept;
FIG. 12 is a graph illustrating various examples of Gamma curves to adjust the contrast;
FIG. 13 is a graph illustrating an HSI color space to adjust the chromaticity;
FIG. 14 is a graph illustrating a curve of the improved chromaticity according to the lightness;
FIG. 15 is a flowchart of an operation of a system to process a faded image, according to an exemplary embodiment of the inventive concept;
FIGS. 16 through 22 are diagrams illustrating interface windows of an image processing operation, according to exemplary embodiments of the inventive concept;
FIG. 23 is a block diagram of an image processing apparatus according to an exemplary embodiment of the inventive concept;
FIG. 24 is a flowchart of a method of compensating an image, according to an exemplary embodiment of the inventive concept;
FIGS. 25 and 26 are flowcharts of methods of processing an image, according to exemplary embodiments of the inventive concept;
FIGS. 27 and 28 illustrate a image compensation system according to an exemplary embodiment of the present general inventive concept; and
FIG. 29 illustrates a window interface to compensate skin regions of an input image according to an exemplary embodiment of the present general inventive concept.

## DETAILED DESCRIPTION OF THE EXEMPLARY EMBODIMENTS

Reference will now be made in detail to exemplary embodiments of the present general inventive concept, examples of which are illustrated in the accompanying drawings, wherein like reference numerals refer to the like elements throughout. The exemplary embodiments are described below in order to explain the present general inventive concept by referring to the figures.

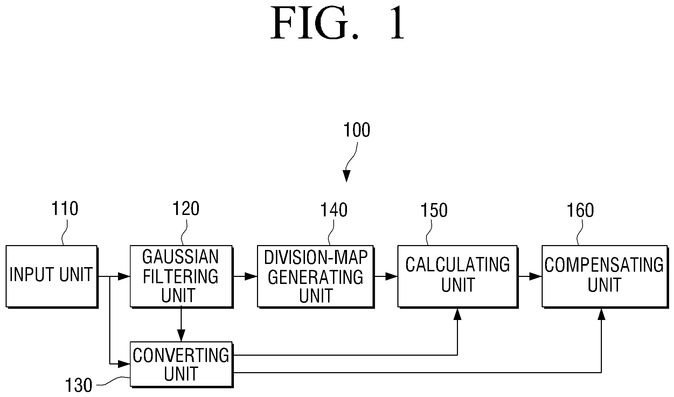

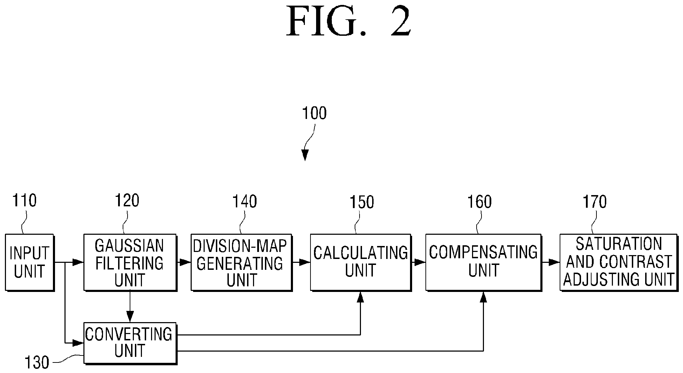

FIGS. 1 and 2 are block diagrams illustrating an image compensating apparatus, according to various exemplary embodiments of the inventive concept. The image compensating apparatus of FIGS. 1 and 2 may be embodied as a single independent electronic device, or alternatively, may be embodied as a module, a unit, or a chip, which is installed in a single independent electronic device.

The image compensating apparatus 100 of FIGS. 1 and 2 may compensate an image by using a compensating method based on converted color space including, but not limited to an L-Cyb-Crg color space and a RGB color space.

In at least one exemplary embodiment illustrated in FIGS. 1 and 2, an image compensating apparatus 100 divides chromaticity of a faded photo input to an input unit 110, in order to estimate and compensate the faded photo. The chromaticity of the of faded input photo may be distributed in a nonuniform manner. For example, in the faded photo, some parts of the image may have a nonuniform chromaticity distribution, whereas some parts of the image have a uniform chromaticity distribution. Thus, in order to divide different chromaticity of the faded image, the image compensating apparatus 100 may use the L-Cyb-Crg color space. The L-Cyb-Crg color space refers to a color space that has a lightness channel L and complementary colors of axes of Cyb, Crg. In this case, L indicates gradation of white and black, Cyb indicates yellow and blue, and Crg indicates red and green.

A faded image generally has an overall red appearance. Thus, when color division is performed on the faded image in the L-Cyb-Crg color space, a large amount of a red component is detected in a Crg channel, and a large amount of yellow component is detected in a Cyb channel.

The image compensating apparatus 100 divides the chromaticity of the faded image by using the L-Cyb-Crg color space, and compensates the divided chromaticity of each respective region.

Examples of configurations of the image compensating apparatus 100 are illustrated in FIGS. 1 and 2.

Referring to FIG. 1, the image compensating apparatus 100 includes an input unit 110, a Gaussian filtering unit 120, a converting unit 130, a division-map generating unit 140, a calculating unit 150, and a compensating unit 160.

The input unit 110 may receive a photo image including an RGB channel. The RGB color channel refers to the red (R), green (G) and blue (B) components of the photo image. Each color channel may be analyzed separately to determine color information residing on a single respective color channel. More specifically, the input unit 110 may receive an image captured by an imaging unit (not illustrated) or a camera, which is placed outside the image compensating apparatus 100, or an image stored in a separate memory (not shown). Alternatively, the input unit 110 may receive an image from an independent device, a module, a unit, a chip, or the like, which is placed outside the image compensating apparatus 100. In this case, the input unit 110 may receive a general image as well as a faded image. That is, an image that is not faded may be compensated by an image compensating apparatus or an image processing apparatus, according to various exemplary embodiments of the inventive concept. In addition, a painting image as well as a photo image may be compensated.

The Gaussian filtering unit 120 performs Gaussian filtering on the photo image received by the input unit 110. The Gaussian filtering unit 120 applies a Gaussian filter to each RGB channel included in the photo image. In detail, the Gaussian filtering may be performed according to Equation 1 below.

$$R_i = I_i(x, y) * F(x, y)$$

$$F(x, y) = Ke^{-(x^2+y^2)/\sigma^2} \quad \text{and} \quad \iint F(x, y)dxdy = 1$$

In Equation 1, 'I' denotes a RGB channel of an input image. 'F' denotes a Gaussian filter. The Gaussian filter may be used so that noise included in the faded image may be blurred, and a contour phenomenon, which may occur when the divided chromaticity is compensated of each respective region, may be reduced.

When the Gaussian filtering unit 120 performs the Gaussian filtering, the division-map generating unit 140 converts an image Ri on which the Gaussian filtering is performed into the L-Cyb-Crg color space. In addition, the division-map generating unit 140 generates a chromaticity division map based on color coordinate values of Cyb-Crg. In this case, the division-map generating unit 140 may determine a space with 8 bits to each pixel, and may determine a bit to each chromaticity axis so as to define chromaticity of each pixel. In detail, as illustrated in Table 1 below, a bit corresponding to each pixel position is set based on the divided chromaticity.

Table 1

| Y | | B | | R | | G | |
|---|---|---|---|---|---|---|---|
| 1 | 0 | 1 | 0 | 1 | 0 | 1 | 0 |

The division-map generating unit 140 may mark bits, as illustrated in Table 1, may compare a chromaticity of each bit, and may obtain chromaticity values of corresponding positions. Thus, an image that is blurred by performing the Gaussian filtering may be divided into regions according to chromaticity. A division map will be described later.

The calculating unit 150 calculates average chromaticity of each respective region by using the division map generated by the division-map generating unit 140. In detail, the calculating unit 150 estimates faded chromaticity in each of the divided regions in the division map. In this case, an RGB image that is Gaussian-blurred is converted into the CMY color space. After being converted into the CMY color space, a division value may be used to calculate the average chromaticity of each respective region, and also the average chromaticity of each respective channel. In this case, chromaticity is estimated and compensated based on gray world assumption. For example, applying the gray world assumption to a printing medium allows for an assumption that an average of each respective channel in an image is gray. Further, under the gray world assumption, chromaticity of an image is divided in a complementary color space having values of LCybCrg, and faded chromaticity of each respective region, is estimated based on the divided chromaticity.

The calculating unit 150 applies the gray world assumption to the faded image in the CMY color space. The calculating unit 150 may calculate the average chromaticity of each CMY value according to Equation 2 below.

$$I_{C,avg}(n) = \frac{1}{NP_n} \sum_{x=0}^{NP_n} 1 - R(x,y,n)$$

$$I_{M,avg}(n) = \frac{1}{NP_n} \sum_{x=0}^{NP_n} 1 - G(x,y,n)$$

$$I_{Y,avg}(n) = \frac{1}{NP_n} \sum_{x=0}^{NP_n} 1 - B(x,y,n)$$

In Equation 2, 'NPn' denotes the number of pixels of a region 'n', 'n' denotes each region, and R(x,y,n), G(x,y,n), and B(x,y,n) denote R, G and B values of each pixel of the region 'n', respectively.

The converting unit 130 converts the photo image on which the Gaussian filtering is performed, or a photo image input to the converting unit 130 through the input unit 110 into the CMY color space. That is, as described above, during a calculating operation of the calculating unit 150, the RGB image that is Gaussian-blurred is converted into the CMY color space. This operation may be performed by the converting unit 130, and then, the resulting values may be provided to the calculating unit 150.

In addition, the converting unit 130 may convert an input image itself into the CMY color space, and may provide the resulting values to the compensating unit 160.

The compensating unit 160 compensates chromaticity of each respective region of the photo image by using values of CMY converted by the converting unit 130, and values calculated by the calculating unit 150, including the average chromaticity values of each CMY value. More specifically, the compensating unit 160 may remove the faded chromaticity by multiplying the average chromaticity of each respective region, which is calculated by the calculating unit 150, by an average chromaticity ratio to lightness. That is, the compensating unit 160 may perform compensation according to Equation 3 below.

$$\hat{I}_i(x,y,n) = W_i(x,y) \frac{I_i(x,y,n)L_{avg}(n)}{I_{i,avg}(n)}, \quad i = C, M, Y$$

..(3)

In Equation 3, Wi(x,y) denotes a weight of pixels of each channel in the CMY color space. That is, Wi(x,y) denotes a weight obtained by converting a size of each channel in a converted Cyb-Crg space into a CMY value.

More specifically, in Equation 3, in order to determine Wi(x,y), a value obtained by converting an image on which Gaussian convolution is performed into Cyb-Crg is used. In this case, when Cyb(x,y) is equal to or greater than 0, Cyb(x,y) is determined to as Yellow. When Cyb(x,y) is less than 0, Cyb(x,y) is determined to as Blue. When Crg(x,y) is equal to or greater than 0, Crg(x,y) is determined to as Red. When Crg(x,y) is less than 0, Crg(x,y) is determined to Green. Cyb(x,y) and Crg(x,y) are normalized for each respective channel by dividing Cyb(x,y) and Crg(x,y) by a maximum value Ymax, Bmax, Rmax, and Gmax in respective regions Y, R, G, and B, and values expressed in terms of Cyb-Crg are converted into values in the CMY color space. In this case, normalized Wi(i=cmy) is calculated by using Yellow itself, C=(G+B)/2, and M=(R+B)/2. The compensating unit 160 may perform compensation by using the above-described method.

In Equation 3 above, Lavg(n) may be an average lightness of each respective region, and Ii(x,y,n) may be chromaticity of each respective pixel of the input photo image. Ii(x,y,n) is a resulting value obtained by converting the photo image input to the input unit 110 into a CMY image in the converting unit 130.

The image compensating apparatus 100 of FIG. 2 further include a saturation and contrast adjusting unit 170 in addition to the image compensating apparatus 100 of FIG. 1.

In FIG. 2, the saturation and contrast adjusting unit 170 adjusts the saturation and contrast of an image of which chromaticity is compensated by the compensating unit 160. That is, with regard to a faded image, lowered saturation and contrast reduction due to increased lightness may not be compensated by compensating chromaticity only. Thus, separate compensation may be further performed on saturation and contrast of the image.

First, the saturation and contrast adjusting unit 170 applies a Gamma curve to a dark region (e.g., less than 0.5) in order to adaptively adjust contrast according to lightness of an image. The Gamma curve may be defined as:

$$\gamma = 1 + |0.5 - mean_I|$$

...(4)

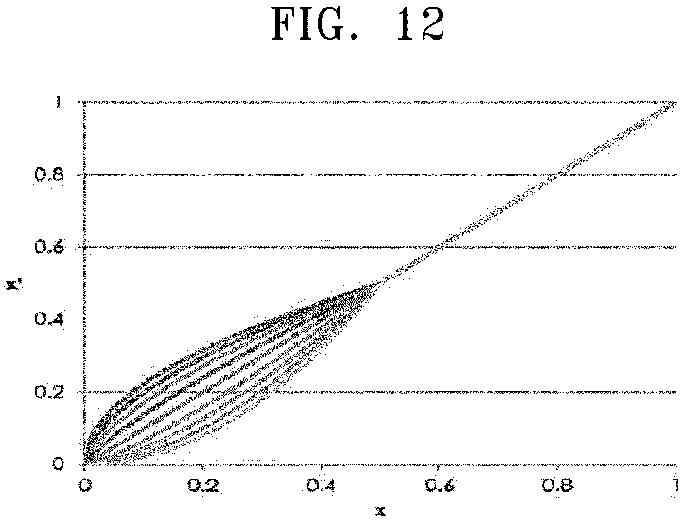

The saturation and contrast adjusting unit 170 may apply different Gamma curves according to average lightness of an image. That is, contrast of the imaged may be increased by applying x1/r when the average lightness of the image is low, and by applying xr when the average lightness of the image is high. FIG. 12 is a graph illustrating various examples of Gamma curves.

The saturation and contrast adjusting unit 170 may improve saturation according to lightness of the image in an hue, saturation and intensity (HSI) color space, in order to increase saturation that is reduced by fading the image. Saturation in the range of 10 to 40 % may be adjusted with respect to a lightness value. In this case, a default value may be determined through a subjective estimation test. For example, 20% may be determined as a default value.

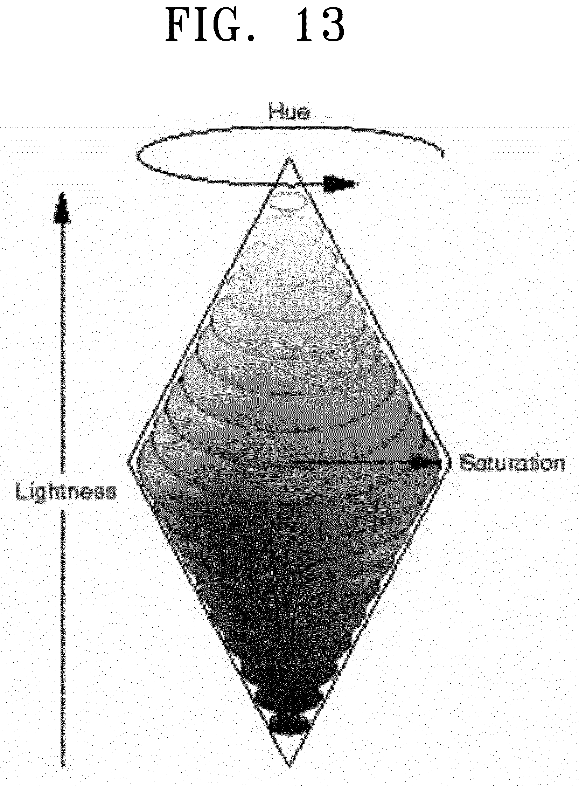

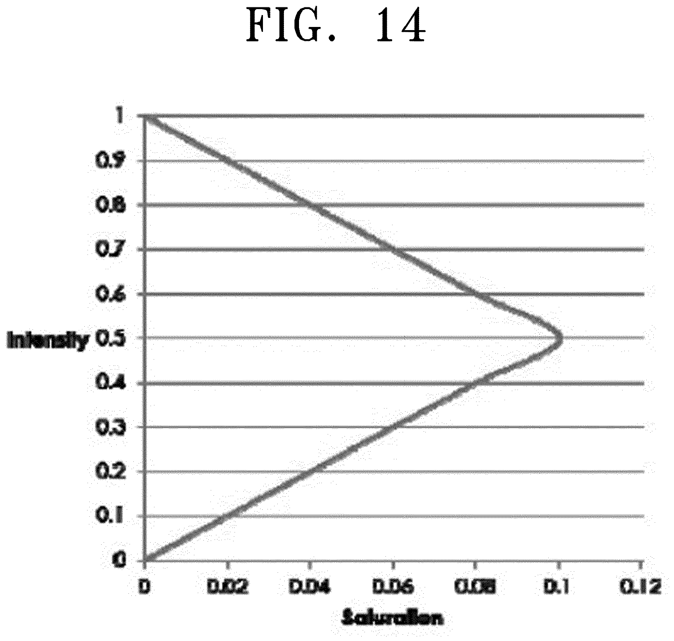

FIG. 13 is a graph illustrating an HSI color space. FIG. 14 is a graph illustrating a case where saturation of an image is improved by the saturation and contrast adjusting unit 170, according to an exemplary embodiment of the inventive concept.

As a result of improving saturation, an image portion such as a skin image may also become smoother than an image of which chromaticity is compensated only.

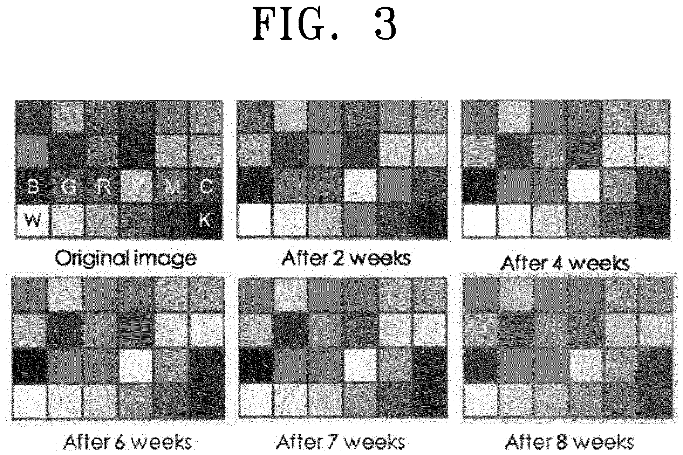

FIG. 3 is a set of images illustrating that chromaticity of a photo image is changed as time passes.

In general, chromaticity of an image captured by a camera varies according to chromaticity of a light source. Such a process of recognizing color by using light may be defined according to Equation 5 below.

$$Q_i = \int S_i(\lambda)R(\lambda)L(\lambda)d\lambda$$

...(5)

In Equation 5, "Qi "is recognized color, "Si "is a response function of human vision, "R" is reflectivity of an object, "L" is a light source, and "i" is each channel R, G, or B. An image captured by using light is determined based on an influence of a uniform light source and reflectivity of an object.

However, a fading degree of a printed image may vary according to the characteristics of dye, the characteristics of photographic paper, a light source, an environment, and the like. That is, even when portions of an image are affected by the same light source, the fading degree of the portions of the image may be different according to colors of the portions of the image, unlike a change in chromaticity when a uniform light source is used.

In order to analyze such characteristics of a faded image, a patch image may be printed using a photoprinter, such as Frontier 570 photo printer. A first printed image is kept in an indoor dark room, and a second printed image is exposed to sunlight outdoors for about 8 weeks to be faded. The results are illustrated in FIG. 3. In this case, a surrounding temperature is a high temperature of about 40 to about 50□, and surrounding humidity is low. Variations of the lightness, hue and saturation of the first and second printed image were measured by using Spectrolino.

FIG. 3 shows scanning images of an original image, and images that are exposed to sunlight for 2, 4, 6, 7, and 8 weeks. As illustrated in FIG. 3, as time passes, the chromaticity of the original image is gradually changed to red chromaticity.

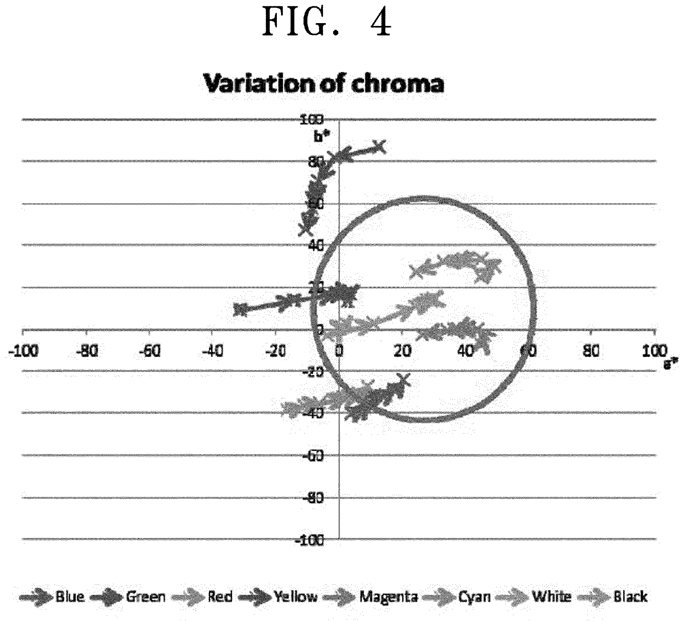

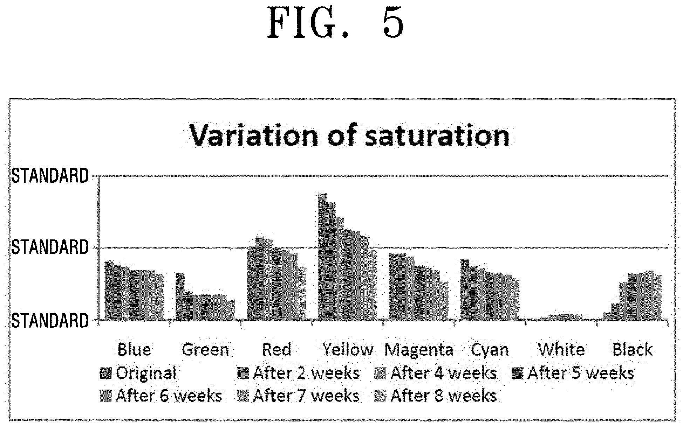

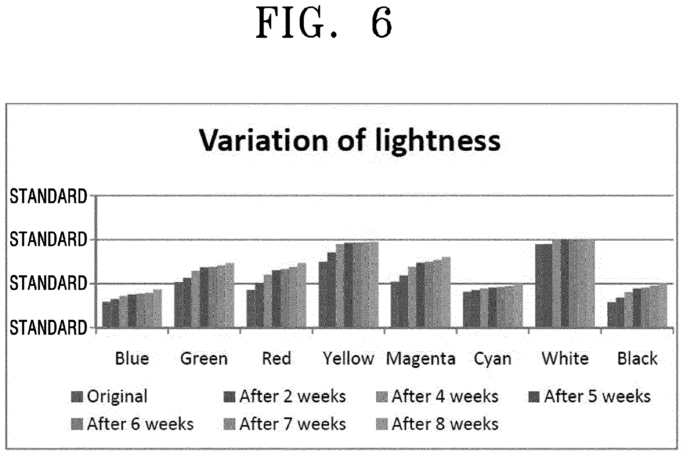

FIGS. 4 through 6 are graphs illustrating variations of chroma, saturation and lightness of a faded image, respectively.

As illustrated in FIGS. 4 through 6, the chroma of the faded image is focused on red, and the saturation of the faded image is lowered. In addition, as time passes, the lightness of the faded image is increased. In this case, with regard to a white patch and a black patch, the chroma of the white patch is barely changed, but the chroma of the black patch is remarkably changed. In addition, the saturation of the white patch is barely changed. These variations are different from a case under an assumption of White Patch Retinex that is a common light source model. White Patch Retinex is based on an assumption in that the chromaticity of a light source is obtained since a white object totally reflects light. On the other hand, in a faded image, a patch containing dye is more affected by a light source than a patch without dye.

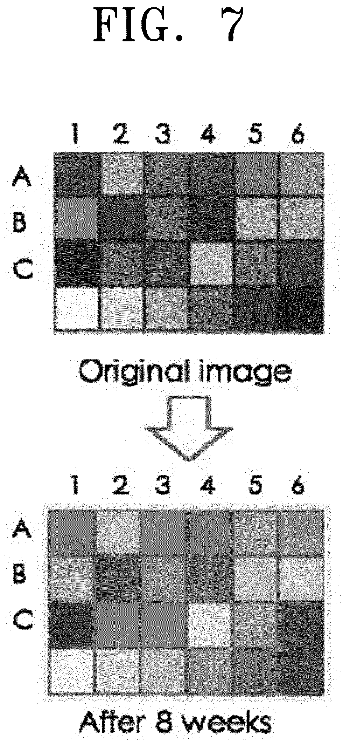

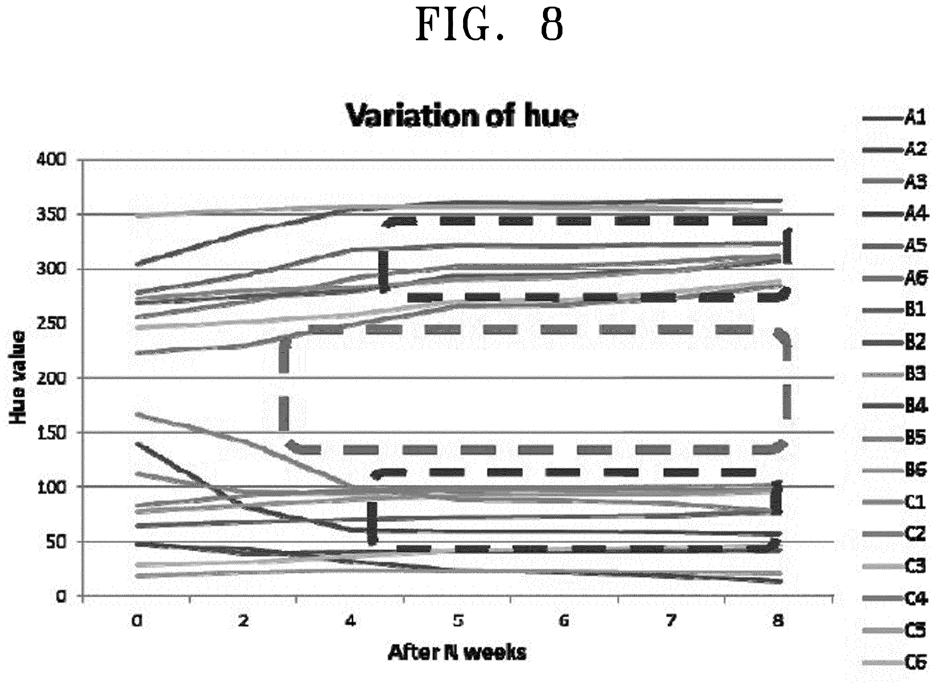

FIG. 7 shows a comparison between an original image and an image after 8 weeks. FIG. 8 is a graph illustrating a variation of hue as time passes.

Referring to FIG. 8, variation of hue is known in a time sequence. Patches of the original image have different hue values. However, as time passes, the hue values of the patches are focused on red region and overlap with each other. In this case, the hue values of the patches are moved to the same red region. However, a movement direction and a movement amount are not constant. This is because a patch image is not determined based on an influence of a uniform light source and reflectivity of an object, unlike in Equation 5, but instead variations of respective patches are different according to various parameters, which is defined according to Equation 6.

$$F = I \cdot E \cong hours(I \cdot E)$$

$$hours(I \cdot E) \cong hours(P \cdot R \cdot E \cdot H \cdot T + N)$$

…(6)

In Equation 6, F is a faded image, I is an original image, and E is a light source. In general, a model of the faded image may be expressed by the product the light source and the original image with time, as illustrated in an upper equation of Equation 6. In detail, the model may be expressed by dye characteristics P, humidity H, temperature T, and noise N, as illustrated in a lower equation of Equation 6. Also in a conventional method of compensating an image based on estimation of a light source, various parameters other than a light source and reflectivity of an object are considered, but are negligible. However, when a faded image is compensated, humidity, a temperature, and a type of light source as well as dye characteristics largely affect a physical change in dye, and thus are not negligible. However, since a faded image is exposed to various surroundings, it is difficult to estimate the humidity, temperature, and type of light source of the faded image. Thus, a similar compensating method to the original image may be applied to the faded image.

Thus, a method of compensating an image based on estimation of a light source of color recognition model of human vision according to Equation 5 may be used. That is, if a single uniform light source is used, variations of all hues of an image are uniform so that estimated chromaticity may be applied to all regions. However, as described above, different results corresponding to the faded image may be obtained. That is, even though an image is affected by a single uniform light source, variations of hues of a printed image are different according to dye characteristics and surrounding characteristics of the printed image.

In consideration with this point, as illustrated in FIGS. 1 and 2, the image compensating apparatus 100 may use a compensating method based on an L-Cyb-Crg color space.

In the compensating method based on the L-Cyb-Crg color space, chromaticity of a faded imaged is considered when the faded image is digital-imaged, unlike in the color recognition model of human vision according to Equation 5, which is assumed in a conventional method of compensating an image based on estimation of a light source.

Color of a faded image is compensated under two assumptions. First, the same color of patches is changed to have the same color. The second assumption is gray world assumption. Based on the assumptions, chromaticity is divided based on the L-Cyb-Crg color space, chromaticity of each respective region is estimated based on the divided chromaticity, and then estimated chromaticity may be compensated.

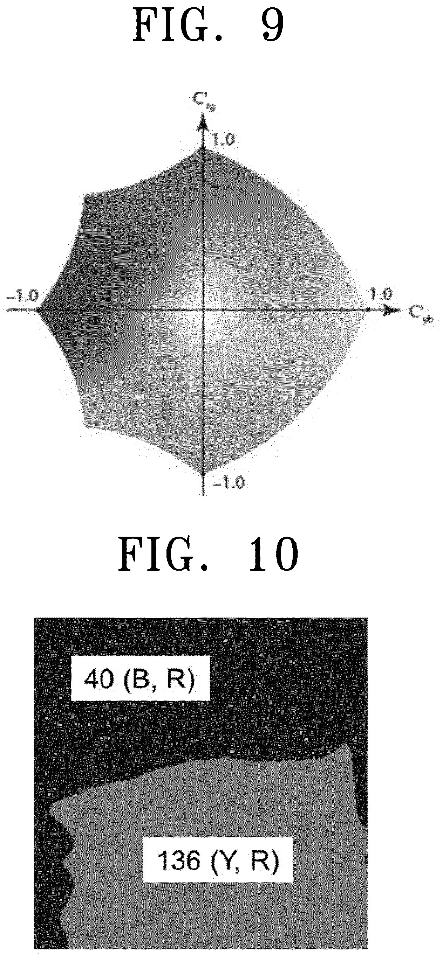

FIG. 9 shows an L-Cyb-Crg color space. As described above, Cyb indicates yellow and blue, and Crg indicates red and green.

In at least one exemplary embodiment, a faded image may be compensated by using a CMY color space instead of a conventional RGB color space. Accordingly, compensation the various dyes of the faded image may be achieved.

Thus, unpredictable variation as well as predictable variation may be compensated.

FIG. 10 is a diagram of a chromaticity division-map, according to an exemplary embodiment of the inventive concept. Referring to FIG. 10, a single photo image may be divided into a plurality of color regions. In at least one exemplary embodiment illustrated in FIG. 10, the photo image is divided into a region (B, R), and a region (Y,R).

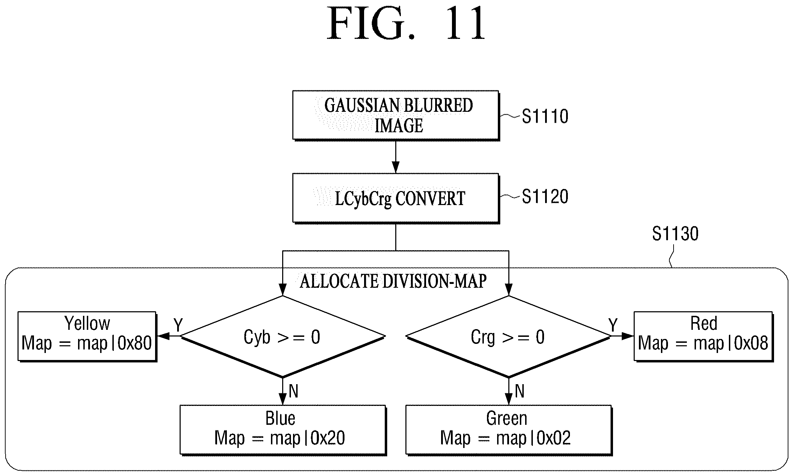

The chromaticity division-map may be generated in various ways. FIG. 11 is a flowchart of a method of generating a chromaticity division-map, according to an exemplary embodiment of the inventive concept.

Referring to FIG. 11, when Gaussian filtering is performed so as to obtain an image that is Gaussian blurred (S1110), the image may be converted into an L-Cyb-Crg color space based on a CMY color space (S1120).

Then, a division map is generated based on the converted image (S1130).

More specifically, Cyb and Crg of each pixel included in the converted image are analyzed. In this case, when $Cyb(x,y)$ is equal to or greater than 0, the pixel is determined to Yellow. When $Cyb(x,y)$ is less than 0, the pixel is determined to Blue. When $Crg(x,y)$ is equal to or greater than 0, the pixel is determined to Red. When $Crg(x,y)$ is less than 0, the pixel is determined to Green. Thus, as illustrated in Table 1, a plurality of bit values may indicate regions of each respective pixel, and division-map may be generated of each respective pixel.

The graphs illustrated in FIGS. 12 through 14 have been described in the detailed description of the saturation and contrast adjusting unit 170 of FIG. 2, and thus the detailed description of the graphs are omitted herein.

The above-described image compensating apparatus 100 may be installed or used in various types of image processing apparatuses. The image processing apparatus may be embodied as an apparatus to form an image on various recording media such as paper, a screen or a memory, for example, an image forming apparatus such as a printer, a scanner, a copier or a multifunctional printer, or a display apparatus such as a television (TV), a monitor, a laptop computer or a personal computer (PC).

According to various exemplary embodiments of the inventive concept, the image processing apparatus may compensate an image by using a compensating method based on the L-Cyb-Crg color space only, or alternatively, may compensate an image by using the compensating method based on the L-Cyb-Crg color space as well as a conventional method based on estimation of a light source.

That is, the image processing apparatus may show various images by using the above-described L-Cyb-Crg color space and at least one conventional method, and may allow a user to select a desired image. Examples of conventional methods may include GWA, WR, CGWR, or the like. Thus, the user may directly preview images being compensated in various ways, and may select a desired compensation method. Accordingly, the user may obtain a compensating method to which users' opinions are reflected.

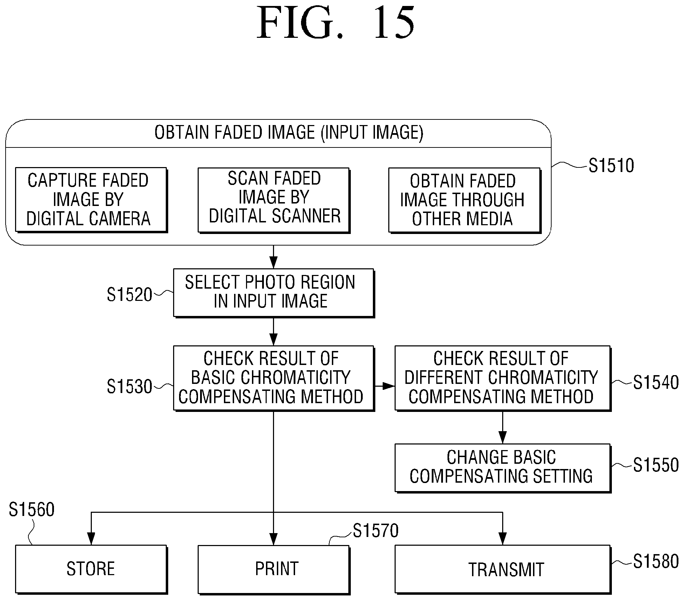

FIG. 15 is a flowchart of an operation of a system to process a faded image, according to an exemplary embodiment of the inventive concept. Referring to FIG. 15, when the faded image is obtained (S1510), a photo region is selected in the faded image. The faded image may be obtained by directly capturing a faded image by a digital camera, may be obtained by scanning a faded image by a digital scanner, and/or may be obtained from other servers and/or storage media.

The photo region may be manually selected from the obtained image by a user.

Thus, when the photo image is selected, the chromaticity of the photo image may be compensated by using a basic compensating method including, but not limited to, a conventional chromaticity compensating method based on an estimation of a light source. Then, the resulting image of which chromaticity is compensated is displayed (S1530).

When the user previews the resulting image compensated by using the basic compensating method, if the user is satisfied with the resulting image, at least one operation of printing, transmitting, and storing may be performed on the resulting image (S1560, S1570, and S1580). The user may select a printing menu, a transmitting menu, a storing menu, or the like, on an interface window. According to the selected menu, the resulting image itself may be printed, or alternatively, the resulting image may be transmitted to an external apparatus or may be stored in a memory.

When the user is not satisfied with the resulting image of which chromaticity is compensated by using the basic compensating method, the user may select a menu to obtain compensated image by using a different compensating method (S1540). The different compensating method may include, but is not limited to, the L-Cyb-Crg color space compensation method described in detail above. In response to selecting the different compensation method, the basic compensating setting mentioned above may be changed so that the different compensating method may be performed (S1550).

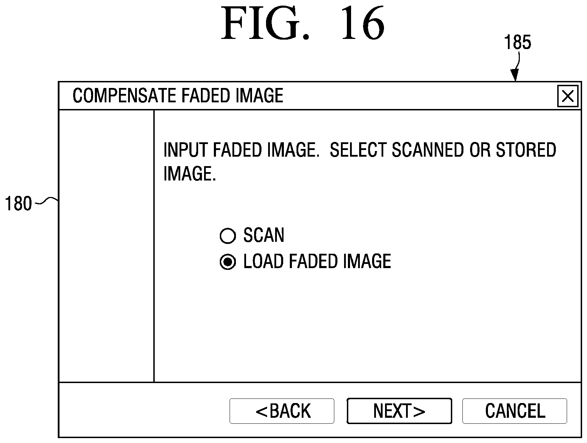

FIGS. 16 through 22 are diagrams illustrating interface windows of an image processing operation, according to exemplary embodiments of the inventive concept.

Referring to FIG. 16, when a program to compensate a faded image is executed in an image processing apparatus 100, an interface window 180 corresponding to the program is displayed in a display 185 of the image processing apparatus 100. The interface window 180 may display various menus to scan and/or to open a photo image to be processed. A user may select a menu corresponding to a method of obtaining a desired image of the user.

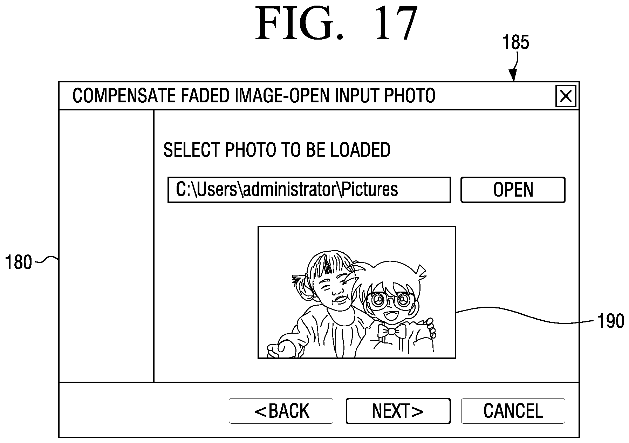

FIG. 17 shows a screen of a case where a menu 'load faded image' is selected. Referring to FIG. 17, a selection area to select a photo to be loaded and menus are displayed. The user may select a photo by inputting a file address where the faded image is stored. The selected photo 190 may be displayed in the selection area of the interface window 180.

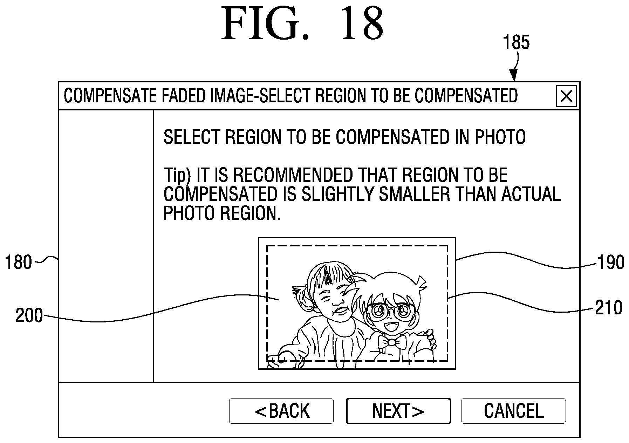

FIG. 18 shows a screen illustrating a method of selecting a compensation region to be compensated in the selected photo 190. The user may select and/or define the region 200 to be compensated by dragging and/or defining the region using a cursor 210. The cursor 210 may be manipulated using one or more keys included with the image processing apparatus 100, and/or by contacting the display 185 via human touching. For example, a user of the image processing apparatus 100 may touch a vicinity of a screen of the display 185 displaying the cursor 210, and may drag the cursor 210 and/or adjust the size of the cursor by moving one or more fingers across the display screen to indicate and/or define the region 200 of the selected photo 190 to be compensated.

As mentioned above, light and dark regions of an image may be affected differently by long periods of exposed light. For example, the chroma of a light region may not be changed by light exposure, while the chroma of dark regions may be significantly affected. In addition, improving saturation of a skin image may also become smoother than an image of which chromaticity is compensated only. Further, the fading degree of the portions of the image may be different according to colors of the portions of the image. Accordingly, dyes used for dark skin regions of persons included in an image may have a higher degree of fading than dyes used for light skin regions.

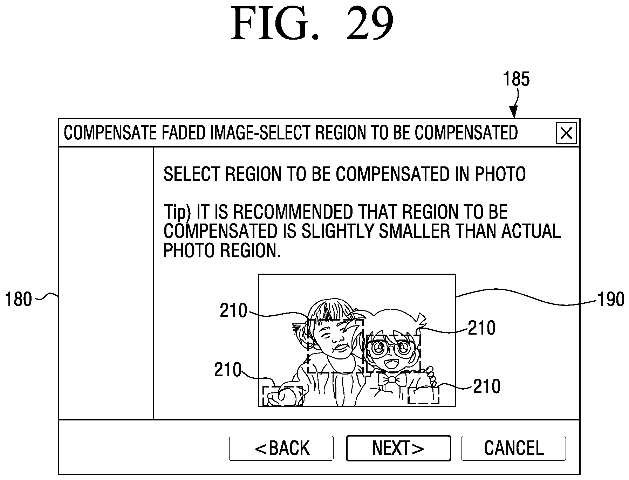

Accordingly, at least one exemplary embodiment illustrated in FIG. 29 illustrates an interface window the image processing apparatus 100 may detect one or more skin regions of an image included in the selected photo. Once the image processing apparatus 100 has detected the one or more skin regions, a user may select one or more desired skin regions to be compensated by touching areas of the display 185 where the one or more skin regions of the selected photo 190 are displayed. In response to touching the desired skin on the display screen, a cursor 210 is displayed indicating the skin region to be compensated. Accordingly, the image processing apparatus 100 may compensate the color of the selected skin regions indicated by the cursors 210, while maintaining the color of non-selected skin regions. Additionally, a user may select a first color compensation method to be applied to a first plurality of selected skin regions, and may select a second color compensation method different from the first compensation method to be applied to a second plurality of selected skin regions.

In another exemplary embodiment, a user may select one or more skin regions of an image displayed in a selected photo 190, as discussed above. In response to the selection of the skin region, the image processing apparatus may determine the race of the image corresponding to the selected skin region, and may automatically compensate the color of the skin region based on an ideal color compensation method corresponding to the detected race.

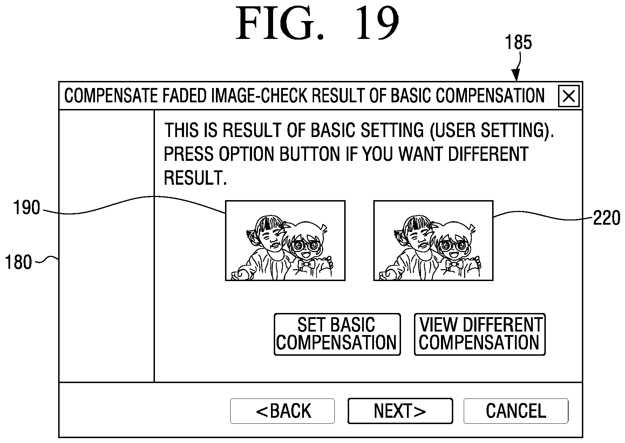

FIG. 19 shows a screen to identify an image that is compensated by using a basic compensating method after the region 200 is selected. Referring to FIG. 19, both an original image 190 and the processed image 220 that is compensated by using the basic compensating method are displayed in a single interface window 180. Thus, the user may directly preview the image on the interface window 180. Then, the user may select whether to apply the basic compensating method, or may preview a different compensating method from the basic compensating method.

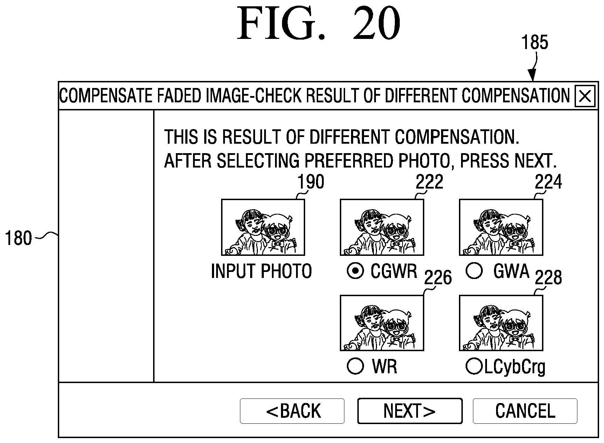

FIG. 20 illustrates a screen of a display 185 where different compensating methods may be selected. Referring to FIG. 20, processed images that are compensated by using Combined Gray World and Retinex (CGWR) 222, Gray World Assumption (GWA) 224, White patch Retinex (WR) 226, and LCybCrg 228 methods are displayed together with the original selected image 190.

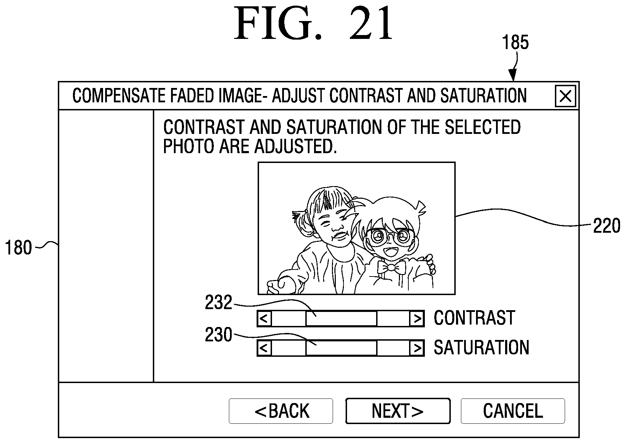

FIG. 21 illustrates an interface window 180 to adjust saturation and contrast of an image after the chromaticity of the image is compensated. The user may directly adjust the saturation and contrast of the image by moving a saturation adjusting tag 230 and a contrast adjusting tag 232 displayed in the interface window 180.

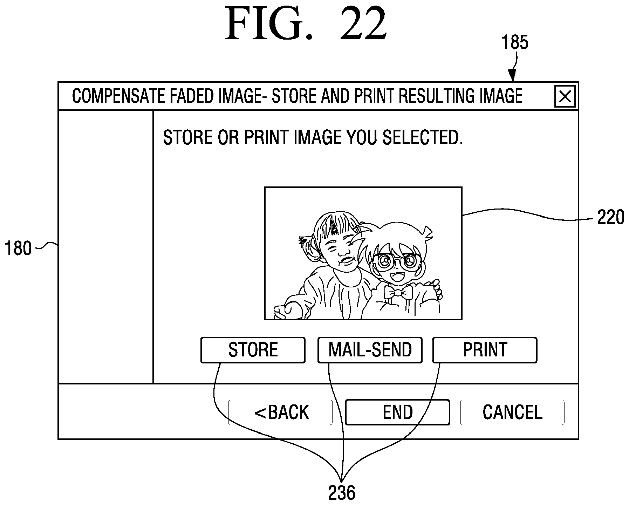

FIG. 22 is illustrates an interface window 180 to display a processed image 220 of which chromaticity, saturation, and saturation are finally compensated. The interface widow 180 may include a menu 234 having one or more inputs 236 to execute a process of the image processing apparatus 100. The user may further process the processed image 220 by selecting one or more operations including, but not limited to, storing, mail-sending, printing, or the like, to finally process an image 220.

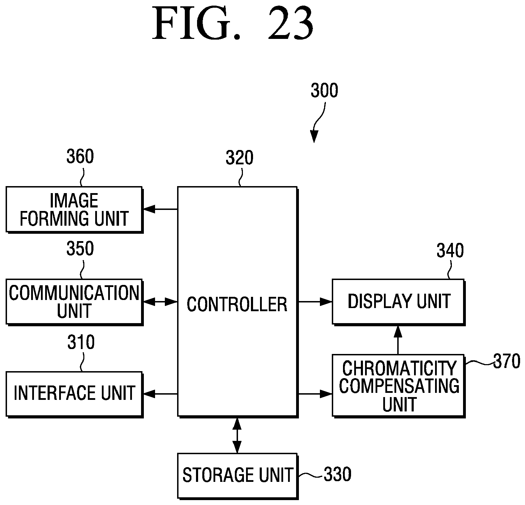

FIG. 23 is a block diagram of an image processing apparatus 300 according to an exemplary embodiment of the inventive concept.

Referring to FIG. 23, the image processing apparatus 300 includes an interface unit 310, a controller 320, a storage unit 330, a display unit 340, a communication unit 350, an image forming unit 360, and a chromaticity compensating unit 370.

The interface unit 310 transmits and receives data to and from various storage media, or various devices that are installed inside or outside the image processing apparatus 300. The image processing apparatus 300 may be connected to a digital camera, a memory stick, a memory card, or the like through the interface unit 310 so as to receive a photo image. That is, the photo image may be at least one of an image captured by an imaging device installed in the image processing apparatus 300, an image transmitted from an external device, and an image read from a recording medium installed inside or outside the image processing apparatus 300.

The display unit 340 may display an image to select a plurality of methods of compensating chromaticity. According to another exemplary embodiment of the inventive concept, as illustrated in FIGS. 16 through 22, interface windows may be sequentially displayed. Alternatively, as described with reference to FIG. 15, an image that is compensated by using a basic compensating method is displayed. In this case, when a user selects a menu corresponding to a different compensating method, at least one image that is compensated by using the different compensating method may be further displayed.

The chromaticity compensating unit 370 compensates chromaticity of the photo image by using a method of compensating chromaticity that is selected in the selection image. In detail, the method of compensating chromaticity may include the compensating method based on an L-Cyb-Crg color space, and at least one method based estimation of a light source.

In this case, the chromaticity compensating unit 370 may include the same structure as that of the image compensating apparatus 370 of FIGS. 1 and 2. Alternatively, in addition to the structure as illustrated in FIG. 1 and 2, the chromaticity compensating unit 370 may further include a light source estimation module (not shown) to compensate an image by using a conventional method based on estimation of a light source. In FIG. 23, in spite of the name of the chromaticity compensating unit 370, the chromaticity compensating unit 370 may compensate saturation and contrast of the image. An operation of the chromaticity compensating unit 370 of FIG. 23 has been described with reference to FIGS. 1 and 2, and thus will be omitted herein.

The controller 320 may control the display unit 340 to display the photo image that is compensated by the chromaticity compensating unit 370.

The communication unit 350 may transmit the final image to an external device, or may receive an original image from an external device through network communication. Additionally, the communicating unit 350 may communicate with a remote communication unit 350' included with a remotely located image processing apparatus 300' via a network, as discussed further below.

The image forming unit 360 performs an image forming operation of printing the final image on paper and/or recording the final image on a recoding medium. More specifically, when a user selects a printing menu, the image forming unit 360 prints the final image itself on paper. The image forming unit 360 may be configured in various ways according to a printing method. If the image forming unit 360 is of a laser type, the image forming unit 360 may include a charging unit, an exposing unit, a photoconductor, a developing unit, a transferring unit, a fixing unit, or the like. Such configuration of the image forming unit 360 is known in the art, and thus will be omitted herein.

The storage unit 330 may store a program to compensate chromaticity, saturation, contrast, or the like, and may store an original image to be compensated. In addition, according to users' selection, the controller 320 may store the final image in the storage unit 330.

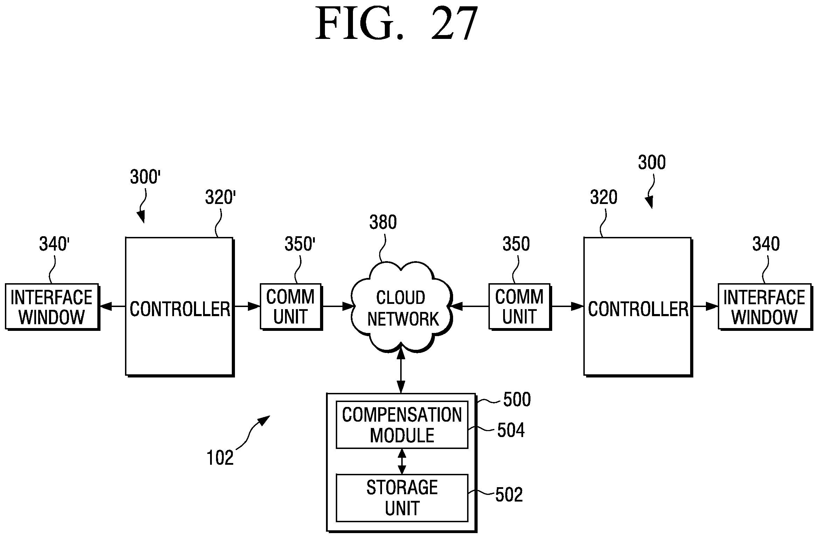

The communication unit 350 allows the image processing apparatus 300 to communicate over a network. Referring to FIG. 27, an exemplary image processing system 102 according to the present general inventive concept is illustrated. The image processing system 102, generally indicated, includes a server module 500 in communication with a network 380. The network 380 includes, but is not limited to, a cloud network 380.

The server module 500 may further include a storage unit 502 that stores one or more original photo images, and a compensation module 504, which compensates fading of a faded photo image, as discussed in detail above. The compensation module 504 may be in communication with the storage unit 502 to receive a faded image photo among the original photo images stored in the storage unit 502.

The image processing system 102 further includes a first image processing apparatus 300 and a second image processing apparatus 300' remotely located from the first processing apparatus 300. The first image processing apparatus 300 and the second image processing apparatus 300' may be in communication with the cloud network 380, as discussed in greater detail below.

Each of the first and second image process apparatuses 300/300' includes a controller 320/320', a display 340/340', and communication units 350/350'. The communication unit 350 communicates with the remote communication unit 350' included with a remotely located image processing apparatus 300' via a network 380. Each of the first and second image processing apparatuses 300/300' may include a web-browser interface that controls the compensation module 504 via the internet. The web-browser may generate control signals based on various Internet environment program languages including, but not limited to, Java.

The cloud network 380 allows a first user to collaborate with a remotely located second user in real-time to compensate fading of a selected faded image 390. For example, a first user may operate a first image processing apparatus 300, which includes a first interface window 340. The first interface window 340 may operate as discussed in detail above. A second user remotely located from the first user may operate a remotely located image processing apparatus 300', which includes a second interface window 340'.

The first and/or second user may select a desired faded photo 390 to be compensated using the fading compensation methods discussed in detail above. For example, the first and/or second controller 320/320' may generate a control signal that selects a faded photo 390 from the storage unit 502 and inputs the faded photo 390 to the compensation module 504. When the faded photo 390 is selected, the faded photo 390 is simultaneously displayed in both the first interface window 340 and the second interface window 340'. Accordingly, a first user and a remotely located second user may collaborate with one another in real-time to generate a finally processed photo that compensates the fading of the faded photo 390.

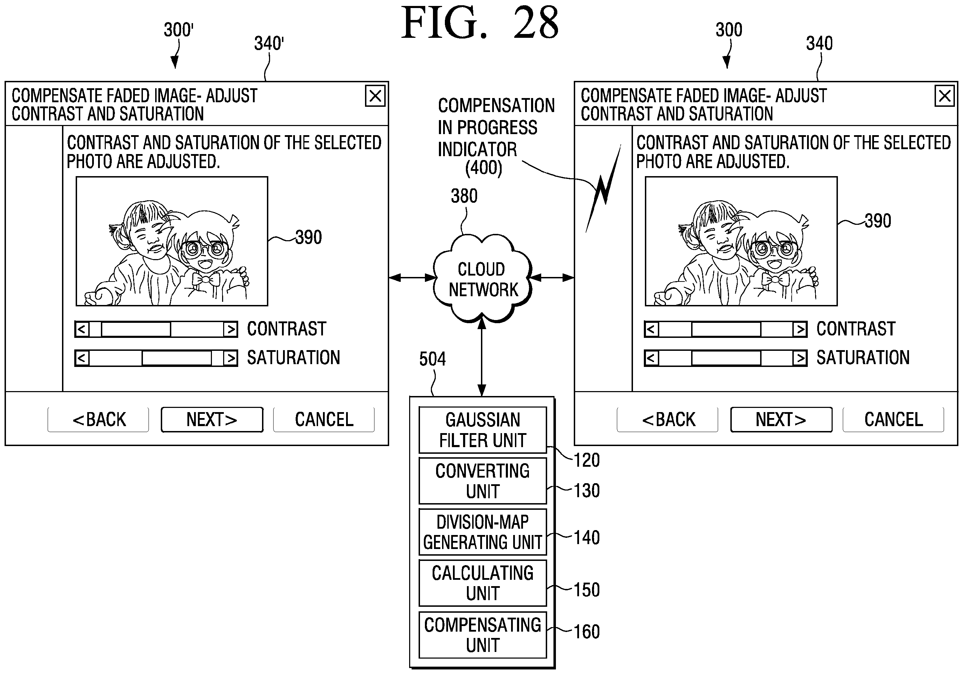

More specifically, the cloud network 380 allows a user of the first image processing apparatus 300 and a user of a remotely located second image processing apparatus 300' to dynamically apply fading compensation methods, as discussed above, to the selected faded photo 390 simultaneously displayed on each of the first interface window 340 and the second interface window 340'. Referring to FIG. 28, for example, when the second user adjusts the contrast and saturation of the faded photo 390 via the remote interface window 340', the first user dynamically realizes the second user's compensation of the faded photo 390 on the first interface window 340. Alternatively, a first user may select a fading compensation method described above, including a CGWR method, a GWA method, a WR method, or a LCybCrg method, using the first interface window 340. In response to selecting the fading compensation method, the faded photo 390 displayed on the remote interface window 340' is compensated. Accordingly, two users remotely located from each other may collaborate to compensate fading of a faded photo in a quick and accurate manner.

Additionally, each of the first and second interface windows 340, 340' may include an indicator 400, which indicates to the first and second users that a compensation of the faded photo 390 is currently in progress. For example, the indicator 400 may be displayed in first interface window 340 in response to the second user completing a fading compensation of the faded photo 390 via the remote second interface window 340' of the remotely located image processing apparatus 300'. In another exemplary embodiment, the indicator 400 may be displayed in the first interface window 340 while the second user in in the process of compensating the faded photo 390. When the second user has completed the fading compensation using the remotely located second image processing unit 300', the indicator 400 disappears from the first interface window 340 of the first processing apparatus 300. Thus, the indicator 400 allows the first user and the remotely located second user to easily determine when to begin a respective compensation on the faded photo 390, without interfering with each other.

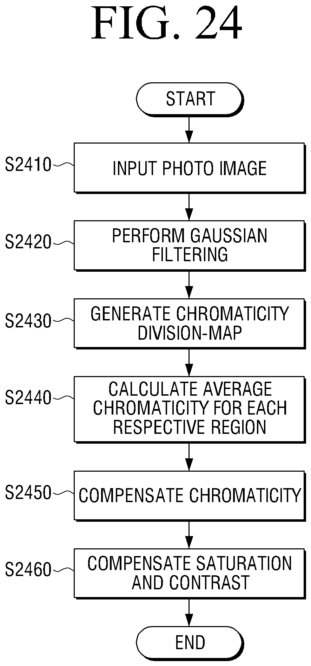

FIG. 24 is a flowchart of a method of compensating an image, according to an exemplary embodiment of the inventive concept. Referring to FIG. 24, when a photo image is input (S2410), Gaussian filtering is performed (S2420), and a chromaticity division-map is generated (S2430). Then, average chromaticity of each respective region is calculated (S2440), and chromaticity of the photo image is compensated according to the average chromaticity (S2450). If necessary, saturation and contrast of the photo image may be compensated (S2460). The method of FIG. 24 is the same as an operation of the image compensating apparatus 370 illustrated in FIGS. 1 and 2, and thus will be omitted herein.

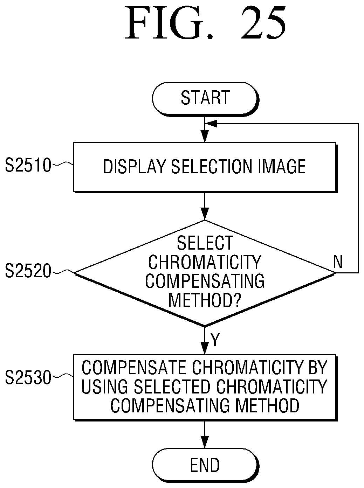

FIG. 25 is a flowchart of a method of processing an image, according to an exemplary embodiment of the inventive concept. Referring to FIG. 25, when a selection image is displayed (S2510), a user may select a method of compensating chromaticity (S2520). Then, the chromaticity may be compensated by using the selected method (S2530).

In this case, the compensating method based on an L-Cyb-Crg color space, and at least one method based estimation of a light source may be displayed on the selection image. The user may select a desired compensating method. In addition, compensating methods may be displayed by displaying a name of a compensating method, or by displaying a resulting image that is compensated by using a corresponding compensating method.

In addition, the compensating method based on an L-Cyb-Crg color space may be a method including performing Gaussian filtering on a photo image, converting the photo image into the L-Cyb-Crg color space, generating a chromaticity division-map based on a Cyb-Crg color coordinate value, calculating average chromaticity of each respective region by using the chromaticity division-map, and then compensating chromaticity of each respective region of the photo image by using a C-M-Y image of the photo image and the calculated chromaticity of each respective region. The compensating method based on an L-Cyb-Crg color space has been described with reference to FIGS. 1 and 2, and thus will be omitted herein.

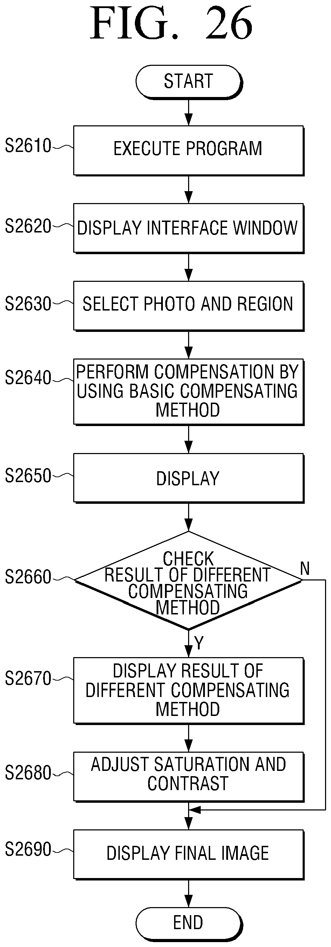

FIG. 26 is a flowchart of a method of processing an image, according to another exemplary embodiment of the inventive concept.

Referring to FIG. 26, a user may execute a program to compensate an image (S2610). The program may be executed by selecting an icon displayed on a screen of the image processing apparatus.

When the program is executed, an interface window to compensate chromaticity is displayed (S2620).

Thus, when a photo image to be compensated is selected in the interface window, the selected photo image is displayed, and a region to be compensated is selected in the photo image (S2630).

When the region to be compensated is selected, the selected region may be compensated by using a basic compensating method (S2640). Then, an image that is compensated by using the basic compensating method is displayed (S2650).

Thus, when a menu to check a result obtained according to a different compensating method is selected (S2660), at least one image that is compensated by using at least one different compensating method is displayed (S2670).

Then, a menu to adjust saturation and contrast is displayed, and the saturation and contrast are adjusted according to the menu (S2680).

When the saturation and contrast are completely adjusted, a final image is displayed (S2690). An image including at least one processing command about the final image is displayed. An operation is performed according to a menu selected in the image. That is, an operation such as printing, transmission, storing, or the like may be performed.

According to the above-described exemplary embodiments, a photo image may be converted into the L-Cyb-Crg color space, and a chromaticity division-map is generated. In at least one exemplary embodiment of the present general inventive concept, the photo image may be converted into an RGB color space, or other color spaces, and the chromaticity division-map may be generated. In this case, an operation of converting a photo image on which Gaussian filtering is performed into a C-M-Y color space may be omitted.

As described above, a faded image may be recovered to an original image as possible by appropriately compensating the faded image. Further, compensation of nonuniform chromatic fading in a photographic image may be achieved.

According to the above-described exemplary embodiments of the inventive concept, methods of compensating and processing an image may be stored in various types of recording media, and may be embodied by a program code that is executed by a central processing unit (CPU) included in an electronic device.

In detail, the program code to execute the methods of compensating and processing an image may be stored in various types of recording media that are capable of being read by a reader, such as a random access memory (RAM), a flash memory, a read only memory (ROM), an erasable programmable ROM (EPROM), an electronically erasable and programmable ROM (EEPROM), a register, a hard disk, a removable disk, a memory card, a universal serial bus (USB) memory, CD-ROM, or the like.

Although a few exemplary embodiments of the present general inventive concept have been illustrated and described, it will be appreciated by those skilled in the art that changes may be made in these exemplary embodiments without departing from the principles of the general inventive concept, the scope of which is defined in the appended claims.

All of the features disclosed in this specification (including any accompanying claims, abstract and drawings), and/or all of the steps of any method or process so disclosed, may be combined in any combination, except combinations where at least some of such features and/or steps are mutually exclusive.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so, as long as they fall under the scope of the claims.

**Claims**

1.  An image compensating apparatus (100) comprising:

    an input unit (110) to receive input of a photo image of which chromaticity is distributed in a non-uniform manner;
    a Gaussian filtering unit (120) to perform Gaussian filtering on the photo image;
    a converting unit (130) to convert the photo image on which the Gaussian filtering is performed into a C-M-Y color space;
    a division-map generating unit (140) to convert the photo image on which Gaussian filtering is performed into an L-Cyb-Crg color space, and generate the chromaticity division-map based on a Cyb-Crg color coordinate value;
    a calculating unit (150) to calculate average chromaticity of each respective region by using the chromaticity division-map; and
    a compensating unit (160) to compensate the chromaticity by using a CMY value converted by the converting unit and the average chromaticity of each respective region..

2.  The image compensating apparatus of claim 1, wherein the compensating unit (160) compensates the photo image by using a weight obtained by converting a size of each channel in a Cyb-Crg space into a CMY value.

3. The image compensating apparatus of claim 2, wherein the division-map generating unit (140) checks Cyb and Crg values of each pixel,
wherein, when the Cyb value is equal to or greater than a first predetermined threshold value, the division-map generating unit determines a corresponding pixel to yellow,
wherein, when the Cyb value is less than the first predetermined threshold value, the division-map generating unit determines the corresponding pixel to blue,
wherein, when the Crg value is equal to or greater than a second predetermined threshold value, the division-map generating unit determines the corresponding pixel to red, and
wherein, when the Crg value is less than the second predetermined threshold value, the division-map generating unit determines the corresponding pixel to green.

4. The image compensating apparatus of claim 2, further comprising:
a saturation and contrast adjusting unit (170) to adjust saturation and contrast of an image of which chromaticity is compensated by the compensating unit.

5. The image compensating apparatus of claim 1, wherein the calculating unit (150) calculates average chromaticity of each CMY value according to the following equation:

$$I_{C,avg}(n) = \frac{1}{NP_n} \sum_{x=0}^{NP_n} 1 - R(x,y,n)$$

$$I_{M,avg}(n) = \frac{1}{NP_n} \sum_{x=0}^{NP_n} 1 - G(x,y,n)$$

$$I_{Y,avg}(n) = \frac{1}{NP_n} \sum_{x=0}^{NP_n} 1 - B(x,y,n)$$

wherein 'NPn' is the number of pixels of a region 'n', 'n' is each region, and R(x,y,n), G(x,y,n), and B(x,y,n) are R, G and B values of each pixel of the region 'n', respectively.

6. The image compensating apparatus of claim 5, wherein the compensating unit (160) compensates chromaticity of each respective region of the photo image according to the following equation:

$$\hat{I}_i(x,y,n) = W_i(x,y) \frac{I_i(x,y,n) L_{avg}(n)}{I_{i,avg}(n)}, \quad i = C, M, Y$$

wherein Wi(x,y) is a weight of pixels of each channel in the CMY color space, Lavg(n) is average lightness of each respective region, and Ii(x,y,n) is chromaticity of each respective pixel of an input photo image.

7. A method of compensating an image, the method comprising:

when a photo image of which chromaticity is distributed in a non-uniform manner_is input, performing Gaussian filtering on the photo image (S2410, S2420);
converting the photo image on which the Gaussian filtering is performed into a C-M-Y color space;
converting the photo image on which the Gaussian filtering is performed into an L-Cyb-Crg color space, and then generating a chromaticity division-map based on a Cyb-Crg color coordinate value (S2430);
calculating average chromaticity of each respective region by using the chromaticity division-map (S2440); and compensating chromaticity of each respective region of the photo image by using a CMY value converted from the photo image and the average chromaticity of each respective region (S2450).

8. The method of claim 7, wherein the compensating comprises compensating the photo image by using a weight obtained by converting a size of each channel in a converted Cyb-Crg space into a CMY value.

9. The method of claim 8, wherein the generating of the chromaticity division-map comprises checking Cyb and Crg values of each pixel; when the Cyb value is equal to or greater than a first predetermined threshold value, determining a corresponding pixel to yellow; when the Cyb value is less than the first predetermined threshold value, determining the corresponding pixel to blue; when the Crg value is equal to or greater than a second predetermined threshold value, determining the corresponding pixel to red; and when the Crg value is less than the second predetermined threshold value, determining the corresponding pixel to green.

10. The method of claim 8, further comprising:
adjusting saturation and contrast of an image of which chromaticity is compensated (S2460).

11. The method of claim 7, wherein the calculating comprises average chromaticity of each CMY value according to the following equation:

$$I_{C,avg}(n) = \frac{1}{NP_n} \sum_{x=0}^{NP_n} 1 - R(x,y,n)$$

$$I_{M,avg}(n) = \frac{1}{NP_n} \sum_{x=0}^{NP_n} 1 - G(x,y,n)$$

$$I_{Y,avg}(n) = \frac{1}{NP_n} \sum_{x=0}^{NP_n} 1 - B(x,y,n)$$

wherein 'NPn' is the number of pixels of a region 'n', 'n' is each region, and R(x,y,n), G(x,y,n), and B(x,y,n) are R, G and B values of each pixel of the region 'n', respectively.

12. The method of claim 11, wherein the compensating comprises compensating chromaticity of each respective region of the photo image according to the following equation:

$$\hat{I}_i(x,y,n) = W_i(x,y)\frac{I_i(x,y,n)L_{avg}(n)}{I_{i,avg}(n)}, \quad i = C, M, Y$$

wherein Wi(x,y) is a weight of pixels of each channel in the CMY color space, Lavg(n) is average lightness of each respective region, and Ii(x,y,n) is chromaticity of each respective pixel of an input photo image.

13. The image processing apparatus of any one of claims 1 to 6 comprising:

a display unit to display a selection window about a plurality of methods of compensating chromaticity;
wherein the chromaticity compensating unit is configured to compensate chromaticity of a photo image of which chromaticity is distributed in a non-uniform manner_by using a chromaticity compensating method that is selected in the selection window, and the plurality of methods of compensating chromaticity comprise a compensating method based on an L-Cyb-Crg color space and at least one method based on estimation of a light source.

**Patentansprüche**

1. Bildausgleichsvorrichtung (100), Folgendes umfassend:

eine Eingabeeinheit (110) zum Empfangen einer Eingabe eines Fotobildes, dessen Farbart in einer nicht einheitlichen Art verteilt ist;
eine Gaußsche Filtereinheit (120) zum Durchführen eines Gaußschen Filterns an dem Fotobild;
eine Umwandlungseinheit (130) zum Umwandeln des Fotobildes, an dem das Gaußsche Filtern durchgeführt wird, in einen C-M-Y-Farbraum;
eine Erzeugungseinheit (140) für eine Einteilungskarte, um das Fotobild, an dem das Gaußsche Filtern durchgeführt wird, in einen L-Cyb-Crg-Farbraum umzuwandeln und die Farbarteinteilungskarte auf der Grundlage eines Cyb-Crg-Farbkoordinatenwerts zu erzeugen;
eine Berechnungseinheit (150) zum Berechnen der durchschnittlichen Farbart jedes jeweiligen Bereichs unter Verwendung der Farbarteinteilungskarte; und
eine Ausgleichseinheit (160) zum Ausgleichen der Farbart unter Verwendung eines durch die Ausgleichseinheit umgewandelten CMY-Werts und der durchschnittlichen Farbart jedes jeweiligen Bereichs .

2. Bildausgleichsvorrichtung nach Anspruch 1, wobei die Ausgleichseinheit (160) unter Verwendung eines Gewichts, das durch das Umwandeln einer Größe jedes Kanals in einem Cyb-Crg-Raum in einen CMY-Wert erhalten wird, das Fotobild ausgleicht.

3. Bildausgleichsvorrichtung nach Anspruch 2, wobei die Erzeugungseinheit (140) für eine Einteilungskarte einen Cyb- und einen Crg-Wert jedes Pixels überprüft,
wobei, wenn der Cyb-Wert gleich oder größer als ein erster vorbestimmter Schwellenwert ist, die Erzeugungseinheit für eine Einteilungskarte ein entsprechendes Pixel als Gelb bestimmt,
wobei, wenn der Cyb-Wert kleiner als der erste vorbestimmte Schwellenwert ist, die Erzeugungseinheit für eine Einteilungskarte das entsprechende Pixel als Blau bestimmt,
wobei, wenn der Crg-Wert gleich oder größer als ein zweiter vorbestimmter Schwellenwert ist, die Erzeugungseinheit für eine Einteilungskarte das entsprechende Pixel als Rot bestimmt, und
wobei, wenn der Crg-Wert kleiner als der zweite vorbestimmte Schwellenwert ist, die Erzeugungseinheit für eine Einteilungskarte das entsprechende Pixel als Grün bestimmt.

4. Bildausgleichsvorrichtung nach Anspruch 2, ferner Folgendes umfassend:
eine Sättigungs- und Kontrasteinstelleinheit (170) zum Einstellen der Sättigung und des Kontrasts eines Bildes, dessen Farbart durch die Ausgleichseinheit ausgeglichen wird.

5. Bildausgleichsvorrichtung nach Anspruch 1, wobei die Berechnungseinheit (150) eine durchschnittliche Farbart jedes CMY-Werts gemäß der folgenden Gleichung berechnet:

$$I_{C,avg}(n) = \frac{1}{NP_n}\sum_{x=0}^{NP_n} 1 - R(x,y,n)$$

$$I_{M,avg}(n) = \frac{1}{NP_n}\sum_{x=0}^{NP_n} 1 - G(x,y,n)$$

$$I_{Y,avg}(n) = \frac{1}{NP_n}\sum_{x=0}^{NP_n} 1 - B(x,y,n)$$

wobei "NPn" die Anzahl von Pixeln eines Bereichs "n" ist, "n" jeder Bereich ist und R(x, y, n), G(x, y, n) und B(x, y n) R-, G- beziehungsweise B-Werte jedes Pixels des Bereichs ‚n' sind.

6. Bildausgleichsvorrichtung nach Anspruch 5, wobei die Ausgleichseinheit (160) eine Farbart jedes jeweiligen Bereichs des Fotobildes gemäß der folgenden Gleichung ausgleicht:

$$\hat{I}_i(x,y,n) = W_i(x,y)\frac{I_i(x,y,n)L_{avg}(n)}{I_{i,avg}(n)}, \quad i = C,M,Y$$

wobei Wi(x, y) eine Gewichtung von Pixeln jedes Kanals in dem CMY-Farbraum ist, Lavg(n) die durchschnittliche Helligkeit jedes jeweiligen Bereichs ist und Ii(x, y, n) die Farbart jedes jeweiligen Pixels eines Eingabefotobildes ist.

7. Verfahren zum Ausgleichen eines Bildes, wobei das Verfahren Folgendes umfasst:

wenn ein Fotobild, dessen Farbart in einer nicht einheitlichen Weise verteilt ist, eingegeben wird, Durchführen eines Gaußschen Filterns an dem Fotobild (S2410, S2420);
Umwandeln des Fotobildes, an dem das Gaußsche Filtern durchgeführt wird, in einen CM-Y-Farbraum;
Umwandeln des Fotobildes, an dem das Gaußsche Filtern durchgeführt wird, in einen L-Cyb-Crg-Farbraum und dann Erzeugen einer Farbarteinteilungskarte auf Grundlage eines Cyb-Crg-Farbkoordinatenwerts (S2430);
Berechnen der durchschnittlichen Farbart jedes jeweiligen Bereichs unter Verwendung der Farbarteinteilungskarte (S2440); und
Ausgleichen der Farbart jedes jeweiligen Bereichs des Fotobildes unter Verwendung eines aus dem Fotobild umgewandelten CMY-Werts und der durchschnittlichen Farbart jedes jeweiligen Bereichs (S2450).

8. Verfahren nach Anspruch 7, wobei das Ausgleichen das Ausgleichen des Fotobildes unter Verwendung einer Gewichtung umfasst, die durch das Umwandeln einer Größe jedes Kanals in einem umgewandelten Cyb-Crg-Farbraum in einen CMY-Wert erhalten wird.

9. Verfahren nach Anspruch 8, wobei das Erzeugen der Farbarteinteilungskarte das Überprüfen eines Cyb- und eines Crg-Werts jedes Pixels; wenn der Cyb-Wert gleich oder größer als ein erster vorbestimmter Schwellenwert ist, Bestimmen eines entsprechenden Pixels als Gelb; wenn der Cyb-Wert kleiner als der erste vorbestimmte Schwellenwert ist, Bestimmen des entsprechenden Pixels als Blau; wenn der Crg-Wert gleich oder größer als ein zweiter vorbestimmter Schwellenwert ist, Bestimmen des entsprechenden Pixels als Rot; und wenn der Crg-Wert kleiner als der zweite vorbestimmte Schwellenwert ist, Bestimmen des entsprechenden Pixels als Grün umfasst.

10. Verfahren nach Anspruch 8, ferner Folgendes umfassend:
Einstellen der Sättigung und des Kontrasts eines Bildes, dessen Farbart ausgeglichen wird (S2460).

11. Verfahren nach Anspruch 7, wobei das Berechnen die durchschnittliche Farbart jedes CMY-Werts gemäß der folgenden Gleichung umfasst:

$$I_{C,avg}(n) = \frac{1}{NP_n} \sum_{x=0}^{NP_n} 1 - R(x, y, n)$$

$$I_{M,avg}(n) = \frac{1}{NP_n} \sum_{x=0}^{NP_n} 1 - G(x, y, n)$$

$$I_{Y,avg}(n) = \frac{1}{NP_n} \sum_{x=0}^{NP_n} 1 - B(x, y, n)$$

wobei "NPn" die Anzahl von Pixeln eines Bereichs "n" ist, "n" jeder Bereich ist und R(x, y, n), G(x, y, n) und B(x, y, n) R-, G- beziehungsweise B-Werte jedes Pixels des Bereichs ‚n' sind.

12. Verfahren nach Anspruch 11, wobei das Ausgleichen das Ausgleichen der Farbart jedes jeweiligen Bereichs des Fotobildes gemäß der folgenden Gleichung umfasst:

$$\hat{I}_i(x, y, n) = W_i(x, y) \frac{I_i(x, y, n) L_{avg}(n)}{I_{i,avg}(n)}, \quad i = C, M, Y$$

wobei Wi(x, y) eine Gewichtung von Pixeln jedes Kanals in dem CMY-Farbraum ist, Lavg(n) die durchschnittliche Helligkeit jedes jeweiligen Bereichs ist und Ii(x, y, n) die Farbart jedes jeweiligen Pixels eines Eingabefotobildes ist.

13. Bildverarbeitungsvorrichtung nach einem der Ansprüche 1 bis 6, Folgendes umfassend:

eine Anzeigeeinheit zum Anzeigen eines Auswahlfensters über mehrere Verfahren zum Ausgleichen der Farbart;
wobei die Farbartausgleichseinheit zum Ausgleichen einer Farbart eines Fotobildes, dessen Farbart in einer nicht einheitlichen Weise verteilt ist, unter Verwendung eines Farbartausgleichsverfahren, das in dem Auswahlfenster ausgewählt wird, konfiguriert ist und wobei die mehreren Verfahren zum Ausgleichen einer Farbart ein Ausgleichsverfahren auf Grundlage eines L-Cyb-Crg-Farbraums und wenigstens ein Verfahren auf Grundlage einer Schätzung einer Lichtquelle umfassen.

**Revendications**

1. Appareil de compensation d'image (100) comprenant :

   une unité d'entrée (110) pour recevoir l'entrée d'une image photographique dont la chromaticité est distribuée de manière non uniforme ;
   une unité de filtrage gaussienne (120) pour effectuer un filtrage gaussien sur l'image photographique ;
   une unité de conversion (130) pour convertir l'image photographique sur laquelle le filtrage gaussien est réalisé en un espace de couleurs C-M-J ;
   une unité de génération de plan de division (140) pour convertir l'image photographique sur laquelle le filtrage gaussien est réalisé dans un espace de couleurs L-Cyb-Crg, et générer le plan de division de chromaticité sur la base d'une valeur de coordonnées de couleur Cyb-Crg ;
   une unité de calcul (150) pour calculer la chromaticité moyenne de chaque région respective à l'aide du plan de division de chromaticité ; et
   une unité de compensation (160) pour compenser la chromaticité à l'aide d'une valeur CMJ convertie par l'unité de conversion et la chromaticité moyenne de chaque région respective.

2. Appareil de compensation d'image selon la revendication 1, dans lequel l'unité de compensation (160) compense l'image photographique à l'aide d'un poids obtenu par la conversion d'une taille de chaque canal dans un espace Cyb-Crg en une valeur de CMJ.

3. Appareil de compensation d'image selon la revendication 2, dans lequel l'unité de génération de plan de carte (140) vérifie les valeurs Cyb et Crg de chaque pixel,
   dans lequel, lorsque la valeur Cyb est égale ou supérieure à une première valeur de seuil prédéterminée, l'unité génératrice de plan de division définit un pixel correspondant en jaune,
   dans lequel, lorsque la valeur Cyb est inférieure à la première valeur de seuil prédéterminée, l'unité génératrice de plan de division définit le pixel correspondant en bleu,
   dans lequel, lorsque la valeur Crg est égale ou supérieure à une seconde valeur de seuil prédéterminée, l'unité génératrice de plan de division définit le pixel correspondant en rouge, et
   dans lequel, lorsque la valeur Crg est inférieure à la seconde valeur de seuil prédéterminée, l'unité génératrice de plan de division définit le pixel correspondant en vert.

4. Appareil de compensation d'image selon la revendication 2, comprenant en outre :
   une unité de réglage de la saturation et du contraste (170) pour régler la saturation et le contraste d'une image dont la chromaticité est compensée par l'unité de compensation.

5. Appareil de compensation d'image selon la revendication 1, dans lequel l'unité de calcul (150) calcule la chromaticité moyenne de chaque valeur CMJ selon l'équation suivante :

$$I_{C,avg}(n) = \frac{1}{NP_n} \sum_{x=0}^{NP_n} 1 - R(x, y, n)$$

$$I_{M,avg}(n) = \frac{1}{NP_n} \sum_{x=0}^{NP_n} 1 - G(x, y, n)$$

$$I_{Y,avg}(n) = \frac{1}{NP_n} \sum_{x=0}^{NP_n} 1 - B(x, y, n)$$

'NPn' étant le nombre de pixels d'une région 'n', 'n' étant chaque région, et R (x,y,n), G (x,y,n) et B (x,y,n) étant les valeurs R, G et B de chaque pixel de la région 'n', respectivement.

6. Appareil de compensation d'image selon la revendication 5, dans lequel l'unité de compensation (160) compense la chromaticité de chaque région respective de l'image photographique selon l'équation suivante :

$$\hat{I}_i(x, y, n) = W_i(x, y) \frac{I_i(x, y, n) L_{avg}(n)}{I_{i,avg}(n)}, i = C, M, J$$

Wi (x,y) étant une pondération en pixels de chaque canal de l'espace colorimétrique CMJ, Lavg(n) étant la luminosité moyenne de chaque région respective, et li(x,y,n) étant la chromaticité de chaque pixel respectif d'une image photographique d'entrée.

7.  Procédé de compensation d'une image, le procédé comprenant :

    lorsqu'une image photographique dont la chromaticité est distribuée de manière non uniforme est entrée, la réalisation d'un filtrage gaussien sur l'image photographique (S2410, S2420) ;
    la conversion de l'image photographique sur laquelle le filtrage gaussien est réalisé en un espace de couleurs C-M-J ;
    la conversion de l'image photographique sur laquelle le filtrage gaussien est réalisé en un espace colorimétrique L-Cyb-Crg, et puis la génération d'un plan de division de chromaticité sur la base d'une valeur de coordonnées de couleur Cyb-Crg (S2430) ;
    le calcul de la chromaticité moyenne de chaque région respective à l'aide du plan de division de chromaticité (S2440) ; et
    la compensation de la chromaticité de chaque région respective de l'image photographique à l'aide d'une valeur CMJ convertie à partir de l'image photographique et la chromaticité moyenne de chaque région respective (S2450).

8.  Procédé selon la revendication 7, dans la compensation comprend la compensation de l'image photographique à l'aide d'un poids obtenu par la conversion d'une taille de chaque canal dans un espace Cyb-Crg converti en une valeur CMJ.

9.  Procédé selon la revendication 8, dans lequel la génération du plan de division de chromaticité comprend la vérification des valeurs Cyb et Crg de chaque pixel ; lorsque la valeur Cyb est égale ou supérieure à une première valeur de seuil prédéterminée, la définition d'un pixel correspondant en jaune ; lorsque la valeur Cyb est inférieure à la première valeur seuil prédéterminée, la définition du pixel correspondant en bleu ; lorsque la valeur Crg est égale ou supérieure à une seconde valeur de seuil prédéterminée, la définition du pixel correspondant en rouge ; et lorsque la valeur Crg est inférieure à la seconde valeur de seuil prédéterminée, la définition du pixel correspondant en vert.

10.  Procédé selon la revendication 8, comprenant en outre :
    le réglage de la saturation et du contraste d'une image dont la chromaticité est compensée (S2460).

11.  Procédé selon la revendication 7, dans lequel le calcul comprend la chromaticité moyenne de chaque valeur CMJ selon l'équation suivante :

$$I_{C,avg}(n) = \frac{1}{NP_n} \sum_{x=0}^{NP_n} 1 - R(x, y, n)$$

$$I_{M,avg}(n) = \frac{1}{NP_n} \sum_{x=0}^{NP_n} 1 - G(x, y, n)$$

$$I_{Y,avg}(n) = \frac{1}{NP_n} \sum_{x=0}^{NP_n} 1 - B(x, y, n)$$

'NPn' étant une pondération en pixels d'une région 'n', 'n' étant chaque région, et R (x,y,n), G (x,y,n) et B (x,y,n) étant les valeurs R, G et B de chaque pixel de la région 'n', respectivement.

12. Procédé selon la revendication 11, dans lequel la compensation comprend la compensation de la chromaticité de chaque région respective de l'image photographique selon l'équation suivante :

$$\hat{I}_i(x, y, n) = W_i(x, y) \frac{I_i(x, y, n) L_{avg}(n)}{I_{i,avg}(n)}, i = C, M, J$$

Wi (x,y) étant une pondération en pixels de chaque canal dans l'espace colorimétrique CMJ, Lavg(n) étant la luminosité moyenne de chaque région respective, et Ii(x,y,n) étant la chromaticité de chaque pixel respectif d'une image photographique d'entrée.

13. Appareil de traitement d'images selon l'une quelconque des revendications 1 à 6, comprenant :

une unité d'affichage pour afficher une fenêtre de sélection concernant une pluralité de procédés de compensation de la chromaticité ;
dans lequel l'unité de compensation de la chromaticité est configurée pour compenser la chromaticité d'une image photographique dont la chromaticité est distribuée de manière non uniforme à l'aide d'un procédé de compensation de chromaticité qui est choisi dans la fenêtre de sélection, et la pluralité de procédés de compensation de la chromaticité comprend un procédé de compensation sur la base d'un espace de couleur L-Cyb-Crg et au moins un procédé sur la base d'une estimation d'une source de lumière.

# FIG. 1

100

| 110 | 120 | 140 | 150 | 160 |
|---|---|---|---|---|
| INPUT UNIT | GAUSSIAN FILTERING UNIT | DIVISION-MAP GENERATING UNIT | CALCULATING UNIT | COMPENSATING UNIT |

CONVERTING UNIT

130

# FIG. 2

100

| 110 | 120 | 140 | 150 | 160 | 170 |
|---|---|---|---|---|---|
| INPUT UNIT | GAUSSIAN FILTERING UNIT | DIVISION-MAP GENERATING UNIT | CALCULATING UNIT | COMPENSATING UNIT | SATURATION AND CONTRAST ADJUSTING UNIT |

CONVERTING UNIT

130

# FIG. 3

Original image

After 2 weeks

After 4 weeks

After 6 weeks

After 7 weeks

After 8 weeks

# FIG. 4

Variation of chroma

# FIG. 5

# FIG. 6

# FIG. 7

Original image

After 8 weeks

# FIG. 8

Variation of hue

EP 2 515 521 B1

# FIG. 9

# FIG. 10

# FIG. 11

GAUSSIAN BLURRED IMAGE —S1110

LCybCrg CONVERT —S1120

S1130

ALLOCATE DIVISION-MAP

Yellow Map = map | 0x80 ← Y — Cyb >= 0 — Y → Red Map = map | 0x08

Crg >= 0

N ↓

Blue Map = map | 0x20

N ↓

Green Map = map | 0x02

EP 2 515 521 B1

# FIG. 12

# FIG. 13

# FIG. 14

# FIG. 15

```
                    ┌─────────────────────────────────────────────┐
                    │       OBTAIN FADED IMAGE (INPUT IMAGE)       │
                    │  ┌──────────┐ ┌──────────┐ ┌──────────┐      │── S1510
                    │  │ CAPTURE  │ │SCAN FADED│ │  OBTAIN  │      │
                    │  │  FADED   │ │ IMAGE BY │ │  FADED   │      │
                    │  │ IMAGE BY │ │ DIGITAL  │ │  IMAGE   │      │
                    │  │ DIGITAL  │ │ SCANNER  │ │ THROUGH  │      │
                    │  │  CAMERA  │ │          │ │OTHER MEDIA│     │
                    │  └──────────┘ └──────────┘ └──────────┘      │
                    └─────────────────────────────────────────────┘
```

OBTAIN FADED IMAGE (INPUT IMAGE) — S1510

CAPTURE FADED IMAGE BY DIGITAL CAMERA

SCAN FADED IMAGE BY DIGITAL SCANNER

OBTAIN FADED IMAGE THROUGH OTHER MEDIA

S1520 — SELECT PHOTO REGION IN INPUT IMAGE

S1530 — CHECK RESULT OF BASIC CHROMATICITY COMPENSATING METHOD

CHECK RESULT OF DIFFERENT CHROMATICITY COMPENSATING METHOD — S1540

CHANGE BASIC COMPENSATING SETTING — S1550

S1560 — STORE

S1570 — PRINT

TRANSMIT — S1580

# FIG. 16

185

COMPENSATE FADED IMAGE ☒

180

INPUT FADED IMAGE.  SELECT SCANNED OR STORED IMAGE.

○ SCAN
◉ LOAD FADED IMAGE

<BACK | NEXT> | CANCEL

# FIG. 17

185

COMPENSATE FADED IMAGE-OPEN INPUT PHOTO ☒

SELECT PHOTO TO BE LOADED

C:\Users\administrator\Pictures | OPEN

180

190

<BACK | NEXT> | CANCEL

# FIG. 18

185

COMPENSATE FADED IMAGE-SELECT REGION TO BE COMPENSATED ☒

SELECT REGION TO BE COMPENSATED IN PHOTO

Tip) IT IS RECOMMENDED THAT REGION TO BE COMPENSATED IS SLIGHTLY SMALLER THAN ACTUAL PHOTO REGION.

180

200

190

210

<BACK    NEXT>    CANCEL

# FIG. 19

185

COMPENSATE FADED IMAGE-CHECK RESULT OF BASIC COMPENSATION  ☒

THIS IS RESULT OF BASIC SETTING (USER SETTING).
PRESS OPTION BUTTON IF YOU WANT DIFFERENT
RESULT.

190

180

220

SET BASIC
COMPENSATION

VIEW DIFFERENT
COMPENSATION

<BACK          NEXT>          CANCEL

# FIG. 20

# FIG. 21

185

COMPENSATE FADED IMAGE- ADJUST CONTRAST AND SATURATION ☒

CONTRAST AND SATURATION OF THE SELECTED
PHOTO ARE ADJUSTED.

220

232 ◁ ▷ CONTRAST

230 ◁ ▷ SATURATION

180

<BACK    NEXT>    CANCEL

# FIG. 22

185

COMPENSATE FADED IMAGE- STORE AND PRINT RESULTING IMAGE  ☒

STORE OR PRINT IMAGE YOU SELECTED.

220

180

| STORE | MAIL-SEND | PRINT |

| <BACK | END | CANCEL |

236

EP 2 515 521 B1

# FIG. 23

300

360
IMAGE
FORMING UNIT

320
CONTROLLER

350
COMMUNICATION
UNIT

340
DISPLAY UNIT

310
INTERFACE UNIT

370
CHROMATICITY
COMPENSATING
UNIT

STORAGE UNIT — 330

# FIG. 24

```
          ┌─────────────┐
          │    START    │
          └─────────────┘
                 │
                 ▼
S2410 ──┌─────────────────────────┐
        │    INPUT PHOTO IMAGE     │
        └─────────────────────────┘
                 │
                 ▼
S2420 ──┌─────────────────────────┐
        │    PERFORM GAUSSIAN       │
        │       FILTERING          │
        └─────────────────────────┘
                 │
                 ▼
S2430 ──┌─────────────────────────┐
        │  GENERATE CHROMATICITY   │
        │      DIVISION-MAP        │
        └─────────────────────────┘
                 │
                 ▼
S2440 ──┌─────────────────────────┐
        │   CALCULATE AVERAGE      │
        │ CHROMATICITY FOR EACH    │
        │   RESPECTIVE REGION      │
        └─────────────────────────┘
                 │
                 ▼
S2450 ──┌─────────────────────────┐
        │  COMPENSATE CHROMATICITY │
        └─────────────────────────┘
                 │
                 ▼
S2460 ──┌─────────────────────────┐
        │  COMPENSATE SATURATION   │
        │     AND CONTRAST         │
        └─────────────────────────┘
                 │
                 ▼
          ┌─────────────┐
          │     END     │
          └─────────────┘
```

# FIG. 25

START

S2510 — DISPLAY SELECTION IMAGE

S2520 — SELECT CHROMATICITY COMPENSATING METHOD? — N

Y

S2530 — COMPENSATE CHROMATICITY BY USING SELECTED CHROMATICITY COMPENSATING METHOD

END

# FIG. 26

```
                    ( START )
                        │
                        ▼
S2610 ─  ┌─────────────────────────┐
         │     EXECUTE PROGRAM     │
         └─────────────────────────┘
                        │
                        ▼
S2620 ─  ┌─────────────────────────┐
         │ DISPLAY INTERFACE WINDOW│
         └─────────────────────────┘
                        │
                        ▼
S2630 ─  ┌─────────────────────────┐
         │  SELECT PHOTO AND REGION │
         └─────────────────────────┘
                        │
                        ▼
S2640 ─  ┌─────────────────────────┐
         │ PERFORM COMPENSATION BY │
         │ USING BASIC COMPENSATING│
         │         METHOD          │
         └─────────────────────────┘
                        │
                        ▼
S2650 ─  ┌─────────────────────────┐
         │         DISPLAY         │
         └─────────────────────────┘
                        │
                        ▼
                    ◇ CHECK
S2660 ─  RESULT OF DIFFERENT ◇ ── N ──┐
              COMPENSATING            │
                 METHOD               │
                        │ Y          │
                        ▼            │
S2670 ─  ┌─────────────────────────┐ │
         │    DISPLAY RESULT OF    │ │
         │ DIFFERENT COMPENSATING  │ │
         │         METHOD          │ │
         └─────────────────────────┘ │
                        │            │
                        ▼            │
S2680 ─  ┌─────────────────────────┐ │
         │  ADJUST SATURATION AND  │ │
         │        CONTRAST         │ │
         └─────────────────────────┘ │
                        │◄───────────┘
                        ▼
S2690 ─  ┌─────────────────────────┐
         │   DISPLAY FINAL IMAGE   │
         └─────────────────────────┘
                        │
                        ▼
                    (  END  )
```

# FIG. 27

EP 2 515 521 B1

# FIG. 28

300'  340'

**COMPENSATE FADED IMAGE- ADJUST CONTRAST AND SATURATION** ☒

CONTRAST AND SATURATION OF THE SELECTED PHOTO ARE ADJUSTED.

◁ ▭ ▷ CONTRAST
◁ ▭ ▷ SATURATION

390

| <BACK | NEXT> | CANCEL |

COMPENSATION IN PROGRESS INDICATOR (400)

380

CLOUD NETWORK

504

| GAUSSIAN FILTER UNIT | 120 |
| CONVERTING UNIT | 130 |
| DIVISION-MAP GENERATING UNIT | 140 |
| CALCULATING UNIT | 150 |
| COMPENSATING UNIT | 160 |

300  340

**COMPENSATE FADED IMAGE- ADJUST CONTRAST AND SATURATION** ☒

CONTRAST AND SATURATION OF THE SELECTED PHOTO ARE ADJUSTED.

390

◁ ▭ ▷ CONTRAST
◁ ▭ ▷ SATURATION

| <BACK | NEXT> | CANCEL |

EP 2 515 521 B1

# FIG. 29

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7443552 B2
- GB 2430829 A
- US 58796874 A
- JP 2005123790 A
- US 20090274386 A1